# EUROPEAN PATENT APPLICATION

(11) **EP 2 255 637 A1**
(43) Date of publication of application: **01.12.2010**
(21) Application number: 09006044.3
(22) Date of filing: 02.05.2009
(51) Int. Cl.: A01N 47/36, A01P 13/02

(54) **Method for weed control in lawn or turf**

(71) Applicant: Bayer CropScience AG, 40789 Monheim (DE)
(72) Inventor: Bickers, Udo, Dr., 65779 Kelkheim (DE); Kilian, Michael, Dr., 51379 Leverkusen (DE); Noeding, Stefanie, 64625 Bensheim (DE); Myers, Donald, F., Wake Forest North Carolina 27587 (US)

(57) **Abstract**

The invention relates to the use of one or more compounds of the formula (I) or salts thereof, 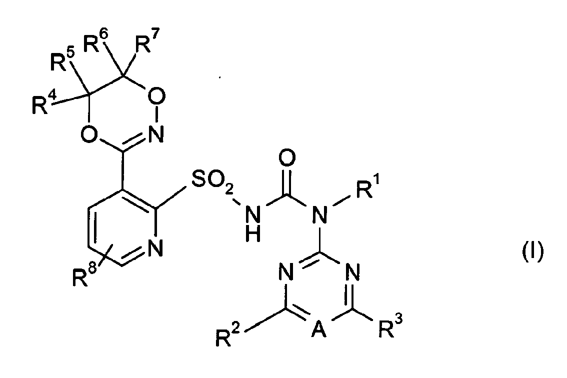 wherein
the groups R¹ to R⁸ are defined as set forth in claim 1, optionally in the presence of additional agrochemical active ingredients, for selective weed control on turf or lawn.

## Description

The invention relates to the field of plant protection and environmental health, more specifically to the use of agrochemicals for selective weed control in certain useful plants, particularly in various plants used for lawn or turf, and to improve turfgrass quality.

High quality, healthy turf or lawn is essential, for example, in the golfing industry but also generally desired for lawns, turf or greens areas for parks, public and private gardens, sports grounds or arenas (e. g. more specifically turf for golf courses, horse racing, football, baseball, hockey, tennis), and for greens in flower gardens, ornamental gardens, plantations and orchards. In the lawn management for instance in a garden, golf course, public green areas, roadsides, etc., control of lawn weeds is the most important task for keeping views and good maintenance of the sites. Up to now, however, there have been no satisfactory herbicides for lawn or turf.

For the purpose of weed control in lawn or turf, the agrochemicals to be used have to show a selective action against the weeds, namely annual and perennial weeds and moss, without substantial injury to the turfgrass or lawn. Many herbicides used in weed control management do not show the selectivity required. Other agrochemicals have disadvantages in that the weed plants are not controlled sufficiently or that some weeds are not controlled at all (gaps). Therefore, there is a need for novel and alternative methods to enhance turfgrass quality and protect turfgrass against weeds.

It is well known that certain N-Azinyl-N'-arylsulfonylureas having a single open-chain hydroxamic acid ester in the aryl moiety, like N-(4,6-dimethylpyrimidin-2-yl)-N'-(2-methoxyaminocarbonyl-phenylsulfonylrurea and the corresponding N-(4,6-dimethylpyrimidin-2-yl)-N'-(2-n-octyloxyaminocarbonylphenylsulfonyl)-urea exhibit herbicidal characteristics (see, for example, DE-A-3 516 435, EP-A-173 958, US-4 704 158). The efficacy of these known compounds is not sufficient in its entirety.

Further, certain herbicidally active N-Azinyl-N'-(het)arylsulfonylureas are known, being substituted by a cyclic dioxazine in their (Het)aryl moitey (see, for example, at US 5,476,936)

Now, it has been found that some compounds selected from the above group of substituted N-Azinyl-N'-arylsulfonylureas, surprisingly, can be used for selective weed control in turf or lawn without substantial injury to the turfgrass or lawn. The selectivity for weed control in turfgrass is surprising because compounds (I) are otherwise known to be very active not only against dicotyledonous weeds but against many grass weeds as well.

Accordingly, one object of the invention relates to the use of compounds of general formula (I) and/or its salts for selective control of unwanted plant growth in turfgrass areas. 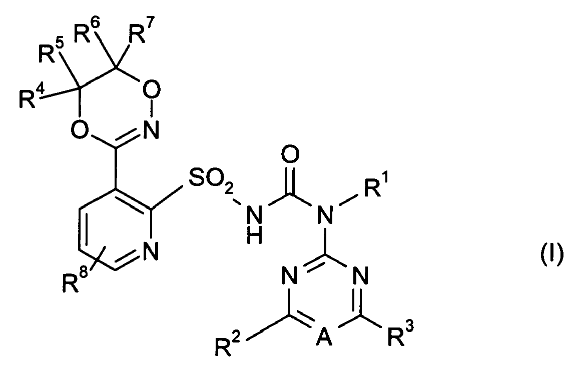 in which
- A: is nitrogen or a CR¹¹ grouping, where R¹¹ is hydrogen, alkyl, halogen or haloalkyl,
- R¹: is hydrogen or an optionally substituted radical from the group consisting of alkyl, alkoxy, alkoxyalkyl, alkenyl, alkynyl, cycloalkyl, cycloalkylalkyl, aralkyl and aryl,
- R²: is hydrogen, halogen or is in each case optionally halogen-substituted alkyl, alkoxy, alkylthio, alkylamino or dialkylamino having in each case 1 to 6 carbon atoms,
- R³: is hydrogen, halogen or is in each case optionally halogen-substituted alkyl, alkoxy, alkylthio, alkylamino or dialkylamino having in each case 1 to 6 carbon atoms,
- R⁴ - R⁷: independently of one another are hydrogen, halogen, cyano, thiocyanato or are in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
- R⁸: is hydrogen, halogen, cyano, thiocyanato or is in each case optionally halogen- substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,

where in the radicals mentioned above the alkyl and alkylene groups may in each case contain 1 to 6 carbon atoms, the alkenyl and alkynyl groups may in each case contain 2 to 6 carbon atoms, the cycloalkyl groups may in each case contain 3 to 6 carbon atoms and the aryl groups may in each case contain 6 or 10 carbon atoms.

Preferred herbicides are compounds of the general formula (I) and salts thereof, in which
- A: is nitrogen or a CH grouping,
- R¹: is hydrogen or an optionally halogen-substituted radical from the group consisting of alkyl, alkoxy, alkoxyalkyl, alkenyl and alkynyl having in each case up to 3 carbon atoms,
- R²: is hydrogen, halogen or is in each case optionally halogen-substituted alkyl, alkoxy, alkylthio, alkylamino or dialkylamino having in each case 1 to 3 carbon atoms in the alkyl radicals,
- R³: is hydrogen, halogen or is in each case optionally halogen-substituted alkyl, alkoxy, alkylthio, alkylamino or dialkylamino having in each case 1 to 3 carbon atoms in the alkyl radicals,
- R⁴ - R⁷: independently of one another are hydrogen, halogen, cyano, thiocyanato or are in each case optionally halogen-substituted alkyl, alkoxy, alkylthio, alkylsulfinyl, alkylsulfonyl, alkylamino, alkylcarbonyl, alkoxycarbonyl or alkylaminocarbonyl having in each case 1 to 3 carbon atoms in the alkyl radicals,
- R⁸: is hydrogen, halogen, cyano, thiocyanato or is in each case optionally halogen- substituted alkyl, alkoxy, alkylthio, alkylsulfinyl, alkylsulfonyl, alkylamino, alkylcarbonyl, alkoxycarbonyl or alkylaminocarbonyl having in each case 1 to 3 carbon atoms in the alkyl radicals.

Also preferred as herbicides are salts obtained by customary processes from compounds of the general formula (I) and bases, such as, for example, sodium hydroxide, potassium hydroxide or calcium hydroxide, sodium hydrid, potassium hydride or calcium hydride, sodium amide, potassium amide or calcium amide and sodium carbonate, potassium carbonate or calcium carbonate, sodium C₁-C₄-alkoxides or potassium C₁-C₄-alkoxides, ammonia, C₁-C₄-alkylamines, di-(C₁-C₄-alkyl)-amines or tri-(C₁-C₄-alkyl)amines.

Particularly preferred as herbicides are compounds of the general formula (I) and salts thereof, in which
- A: is nitrogen or a CH grouping,
- R¹: is hydrogen, methyl, ethyl, methoxy, methoxymethyl or ethoxy,
- R²: is hydrogen, chlorine, methyl, ethyl, trifluoromethyl, methoxy, ethoxy, difluoromethoxy, methylthio, methylamino or dimethylamino,
- R³: is hydrogen, chlorine, methyl, ethyl, trifluoromethyl, methoxy, ethoxy, difluoromethoxy, methylthio, methylamino or dimethylamino,
- R⁴ - R⁷: independently of one another are hydrogen, fluorine, chlorine, cyano, or are in each case optionally chlorine- or fluorine-substituted methyl, methylthio, methylsulfinyl, methylsulfonyl, methoxycarbonyl and ethoxycarbonyl, preferably hydrogen,
- R⁸: is hydrogen, fluorine, chlorine, bromine, cyano or is in each case optionally chlorine- or fluorine-substituted methyl, methoxy, ethoxy, methylthio, ethylthio, methylsulfinyl, ethylsulfinyl, methylsulfonyl, ethylsulfonyl, methyl- or dimethylamino, preferably hydrogen.

Particularly preferred as herbicides are compounds of the general formula (I) and salts thereof, in particular alkali metal salts thereof,

in which
- A: is nitrogen,
- R¹: is hydrogen or methyl,
- R²: is hydrogen, chlorine, methyl, ethyl, trifluoromethyl, methoxy, ethoxy, difluoromethoxy, methylthio, methylamino or dimethylamino,
- R³: is hydrogen, chlorine, methyl, ethyl, trifluoromethyl, methoxy, ethoxy, difluoromethoxy, methylthio, methylamino or dimethylamino,
- R⁴ - R⁷: are hydrogen,
- R⁸: is hydrogen.

Likewise particularly preferred as herbicides are compounds of general formula (I) and salts thereof, in particular alkali metal salts thereof, in which
- A: is a CH grouping,
- R¹: is hydrogen or methyl,
- R²: is hydrogen, chlorine, methyl, ethyl, trifluoromethyl, methoxy, ethoxy, difluoromethoxy, methylthio, methylamino or dimethylamino,
- R³: is hydrogen, chlorine, methyl, ethyl, trifluoromethyl, methoxy, ethoxy, difluoromethoxy, methylthio, methylamino or dimethylamino,
- R⁴ - R⁷: are hydrogen,
- R⁸: is hydrogen.

The general or preferred radical definitions given above can be combined with one another as desired, i.e. including combinations between the given preferred ranges.

The hydrocarbon radicals mentioned in the definitions, such as alkyl, alkenyl or alkynyl, also in combinations with heteroatoms, such as in alkoxy, alkylthio, haloalkyl or alkylamino, are straight-chain or branched, even if this is not explicitly mentioned.

If appropriate, it is possible to prepare salts from the compounds of the general formula (I), for example metal salts such as alkali (for example Na, K) salts or alkaline earth (for example Mg, Ca) salts or ammonium salts or amine salts. Such salts are obtained in a simple manner by customary methods of forming salts, for example by dissolving or dispersing a compound of the formula (I) in a suitable diluent, such as, for example, methylene chloride, acetone, tert-butyl methyl ether or toluene, and adding a suitable base. The salts can then - if appropriate after prolonged stirring - be isolated by concentration or filtration with suction.

### Examples of compounds of general formula (I)

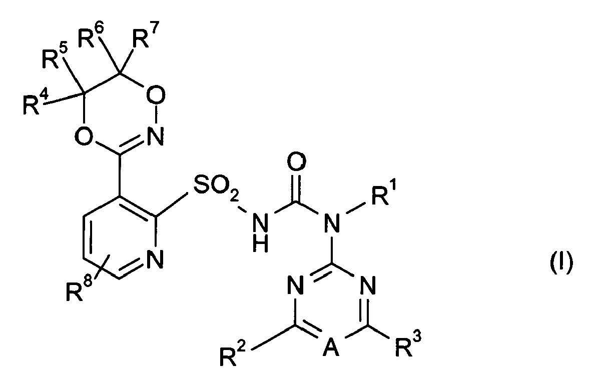

to be used as herbicides according to the invention are mentioned in Table A below, where the following abbreviations are used:
m.p.: = melting point
decomp. = with decomposition
⁽⁺⁾ = the stated melting point (M.p.) refers in each case to the corresponding sodium salt, i.e. the corresponding compound in which the hydrogen of the -SO₂-NH- group is replaced by sodium.

**Table A: Examples of compounds of the formula (I) where R⁴ = R⁵ = R⁶ = R⁷ = R⁸ = H:**

| Ex. No. | R¹ | A | R² | R³ | m.p. (°C) |
|---|---|---|---|---|---|
| A1 | H | CH | OCH₃ | OC₂H₅ | 154 |
| A2 | H | CH | OCH₃ | CH₃ | |
| A3 | H | CH | OHC₃ | CH₃ | 180-181⁽⁺⁾ |
| A4 | H | CH | OCH₃ | C₂H₅ | |
| A5 | H | CH | OCH₃ | CF₃ | |
| A6 | H | CH | OCH₃ | OCF₂H | |
| A7 | H | CH | OCH₃ | NHCH₃ | |
| A8 | H | CH | OCH₃ | N(CH₃)₂ | 199.5 |
| A9 | H | CH | OCH₃ | Cl | 110-111 |
| A10 | H | CH | OCH₃ | Cl | 175-178⁽⁺⁾ |
| A11 | H | CH | OCH₃ | OCH₃ | 167-168 |
| A12 | H | CH | OCH₃ | OCH₃ | 171-172⁽⁺⁾ |
| A13 | H | CH | OC₂H₅ | OC₂H₅ | |
| A14 | H | CH | OC₂H₅ | OC₂H₅ | 152-154⁽⁺⁾ |
| A15 | H | CH | OC₂H₅ | CH₃ | |
| A16 | H | CH | OC₂H₅ | C₂H₅ | |
| A17 | H | CH | OC₂H₅ | CF₃ | |
| A18 | H | CH | OC₂H₅ | OCF₂H | |
| A19 | H | CH | OC₂H₅ | NHCH₃ | |
| A20 | H | CH | OC₂H₅ | N(CH₃)₂ | |
| A21 | H | CH | OC₂H₅ | Cl | 158-159 |
| A22 | H | CH | OC₂H₅ | Cl | 213⁽⁺⁾ |
| A23 | H | CH | CH₃ | CH₃ | 153 |
| A24 | H | CH | CH₃ | C₂H₅ | |
| A25 | H | CH | CH₃ | CF₃ | |
| A26 | H | CH | CH₃ | OCF₂H | |
| A27 | H | CH | CH₃ | NHCH₃ | |
| A28 | H | CH | CH₃ | N(CH₃)₂ | |
| A29 | H | CH | CH₃ | Cl | 108-109 |
| A30 | H | CH | CH₃ | Cl | >300⁽⁺⁾ |
| A31 | H | CH | C₂H₅ | C₂H₅ | |
| A32 | H | CH | C₂H₅ | CF₃ | |
| A33 | H | CH | C₂H₅ | OCF₂H | |
| A34 | H | CH | C₂H₅ | NHCH₃ | |
| A35 | H | CH | C₂H₅ | Cl | |
| A36 | H | CH | CF₃ | CF₃ | |
| A37 | H | CH | CF₃ | OCF₂H | |
| A38 | H | CH | CF₃ | NHCH₃ | |
| A39 | H | CH | CF₃ | N(CH₃)₂ | |
| A40 | H | CH | CF₃ | Cl | |
| A41 | H | CH | OCF₂H | OCF₂H | |
| A42 | H | CH | OCF₂H | NHCH₃ | |
| A43 | H | CH | OCF₂H | N(CH₃)₂ | |
| A44 | H | CH | OCF₂H | Cl | |
| A45 | H | CH | NHCH₃ | NHCH₃ | |
| A46 | H | CH | NHCH₃ | N(CH₃)₂ | |
| A47 | H | CH | NHCH₃ | Cl | |
| A48 | H | CH | N(CH₃)₂ | N(CH₃)₂ | |
| A49 | H | CH | N(CH₃)₂ | Cl | |
| A50 | H | CH | Cl | Cl | |
| A51 | H | N | OCH₃ | OCH₃ | 255 |
| A52 | H | N | OCH₃ | OCH₃ | 159-162⁽⁺⁾ |
| A53 | H | N | OCH₃ | OC₂H₅ | |
| A54 | H | N | OCH₃ | CH₃ | |
| A55 | H | N | OCH₃ | C₂H₅ | |
| A56 | H | N | OCH₃ | CF₃ | |
| A57 | H | N | OCH₃ | OCF₂H | |
| A58 | H | N | OCH₃ | NHCH₃ | |
| A59 | H | N | OCH₃ | N(CH₃)₂ | |
| A60 | H | N | OCH3 | N(CH₃)₂ | 156⁽⁺⁾ |
| A61 | H | N | OCH₃ | Cl | |
| A62 | H | N | OC₂H₅ | OC₂H₅ | |
| A63 | H | N | OC₂H₅ | CH₃ | |
| A64 | H | N | OC₂H₅ | C₂H₅ | |
| A65 | H | N | OC₂H₅ | CF₃ | |
| A66 | H | N | OC₂H₅ | OCF₂H | |
| A67 | H | N | OC₂H₅ | NHCH₃ | |
| A68 | H | N | OC₂H₅ | N(CH₃)₂ | |
| A69 | H | N | OC₂H₅ | Cl | |
| A70 | H | N | OC₂H₅ | Cl | 213⁽⁺⁾ |
| A71 | H | N | CH₃ | CH₃ | |
| A72 | H | N | CH₃ | C₂H₅ | |
| A73 | H | N | CH₃ | CF₃ | |
| A74 | H | N | CH₃ | OCF₂H | |
| A75 | H | N | CH₃ | NHCH₃ | |
| A76 | H | N | CH₃ | N(CH₃)₂ | |
| A77 | H | N | CH₃ | Cl | |
| A78 | H | N | C₂H₅ | C₂H₅ | |
| A79 | H | N | C₂H₅ | CF₃ | |
| A80 | H | N | C₂H₅ | OCF₂H | |
| A81 | H | N | C₂H₅ | NHCH₃ | |
| A82 | H | N | C₂H₅ | Cl | |
| A83 | H | N | CF₃ | CF₃ | |
| A84 | H | N | CF₃ | OCF₂H | |
| A85 | H | N | CF₃ | NHCH₃ | |
| A86 | H | N | CF₃ | N(CH₃)₂ | |
| A87 | H | N | CF₃ | Cl | |
| A88 | H | N | OCF₂H | OCF₂H | |
| A89 | H | N | OCF₂H | NHCH₃ | |
| A90 | H | N | OCF₂H | N(CH₃)₂ | |
| A91 | H | N | OCF₂H | Cl | |
| A92 | H | N | NHCH₃ | NHCH₃ | |
| A93 | H | N | NHCH₃ | N(CH₃)₂ | |
| A94 | H | N | NHCH₃ | Cl | |
| A95 | H | N | N(CH₃)₂ | N(CH₃)₂ | |
| A96 | H | N | N(CH₃)₂ | Cl | |
| A97 | H | N | Cl | Cl | |
| A98 | CH₃ | N | OCH₃ | OCH₃ | |
| A99 | CH₃ | N | OCH₃ | OC₂H₅ | |
| A100 | CH₃ | N | OCH₃ | CH₃ | |
| A101 | CH₃ | N | OCH₃ | C₂H₅ | |
| A102 | CH₃ | N | OCH₃ | CF₃ | |
| A103 | CH₃ | N | OCH₃ | OCF₂H | |
| A104 | CH₃ | N | OCH₃ | NHCH₃ | |
| A105 | CH₃ | N | OCH₃ | N(CH₃)₂ | |
| A106 | CH₃ | N | OCH₃ | Cl | |
| A107 | CH₃ | N | OC₂H₅ | OC₂H₅ | |
| A108 | CH₃ | N | OC₂H₅ | CH₃ | |
| A109 | CH₃ | N | OC₂H₅ | C₂H₅ | |
| A110 | CH₃ | N | OC₂H₅ | CF₃ | |
| A111 | CH₃ | N | OC₂H₅ | OCF₂H | |
| A112 | CH₃ | N | OC₂H₅ | NHCH₃ | |
| A113 | CH₃ | N | OC₂H₅ | N(CH₃)₂ | |
| A114 | CH₃ | N | OC₂H₅ | Cl | |
| A115 | CH₃ | N | CH₃ | CH₃ | |
| A116 | CH₃ | N | CH₃ | C₂H₅ | |
| A117 | CH₃ | N | CH₃ | CF₃ | |
| A118 | CH₃ | N | CH₃ | OCF₂H | |
| A119 | CH₃ | N | CH₃ | NHCH₃ | |
| A120 | CH₃ | N | CH₃ | N(CH₃)₂ | |
| A121 | CH₃ | N | CH₃ | Cl | |
| A122 | CH₃ | N | C₂H₅ | C₂H₅ | |
| A123 | CH₃ | N | C₂H₅ | CF₃ | |
| A124 | CH₃ | N | C₂H₅ | OCF₂H | |
| A125 | CH₃ | N | C₂H₅ | NHCH₃ | |
| A126 | CH₃ | N | C₂H₅ | Cl | |
| A127 | CH₃ | N | CF₃ | CF₃ | |
| A128 | CH₃ | N | CF₃ | OCF₂H | |
| A129 | CH₃ | N | CF₃ | NHCH₃ | |
| A130 | CH₃ | N | CF₃ | N(CH₃)₂ | |
| A131 | CH₃ | N | CF₃ | Cl | |
| A132 | CH₃ | N | OCF₂H | OCF₂H | |
| A133 | CH₃ | N | OCF₂H | NHCH₃ | |
| A134 | CH₃ | N | OCF₂H | N(CH₃)₂ | |
| A135 | CH₃ | N | OCF₂H | Cl | |
| A136 | CH₃ | N | NHCH₃ | NHCH₃ | |
| A137 | CH₃ | N | NHCH₃ | N(CH₃)₂ | |
| A138 | CH₃ | N | NHCH₃ | Cl | |
| A139 | CH₃ | N | N(CH₃)₂ | N(CH₃)₂ | |
| A140 | CH₃ | N | N(CH₃)₂ | Cl | |
| A141 | CH₃ | N | Cl | Cl | |
| A142 | H | N | N(CH₃)₂ | OCH₂CF₃ | 158 |
| A143 | H | CH | Cl | OCH₂CF₃ | 204-205 |
| A144 | H | CH | Cl | OCH₂CF₃ | |
| A145 | H | CH | Cl | OCH₂CF₃ | 207⁽⁺⁾ |

The compounds of the formula (I) and their salts, all termed herein below as compounds of formula (I), have an excellent herbicidal activity against a broad range of economically important monocotyledonous and dicotyledonous unwanted plants. For this purpose, unwanted plants are defined as plant growing at areas at which they are not wanted to grow. These plants can be harmful plants (like, for example weeds or unwanted crops) but can also be harmful plants that are resistant against certain herbicides, like glyphosate, atrazin, glufosinate and/or imidazolinone based heribicides.

The herbicidal compounds of formula (I) mentioned above show an excellent and desirable effect in terms of weed controlling on the lawn or turf without or substantial without injury to the lawn or turf.

The herbicidal compounds of general formula (I) can, for example, be applied for controlling the following plants:
Monocotyledoneous weeds, belonging to a genus such as: echinochloa, setaria, panicum, digitaria, phleum, eleusine, brachiaria, bromus, avena, cyperus, sorghum, agropyron, monochoria, fimbristylis, sagittaria, eleocharis, scirpus, ischaemum, sphenoclea, dactyloctenium, alopecurus, apera.

Diocotyledoneous weeds, belonging to a genus such as: sinapis, lepidium, galium, stellaria, matricaria, anthemis, galinsoga, chenopodium, urtica, senecio, amaranthus, portulaca, xanthium, convolvulus, ipomoea, polygonum, sesbania, ambrosia, cirsium, carduus, sonchus, solanum, rorippa, rotala, lindernia, lamium, veronica, abutilon, emex, datura, viola, galeopsis, papaver, centaurea, trifolium, ranunculus, taraxacum, euphorbia, oxalis, plantago, bellis.

Monocotyledoneous crops (transgenic or non-transgenic) belonging to a genus such as: oryza, zea, triticum, hordeum, avena, secale, sorghum, panicum, saccharum, ananas, asparagus, allium.

Dicotyledoneous crops (transgenic or non-transgenic) belonging to a genus such as: gossypium, beta, solanum, nicotiana, lycopersicon, brassica, lactuca, cucumis, cucurbita.

The use of the herbicidal compounds of formula (I), however, should not be restricted to these weeds in any way, but can be applied against other weeds in the same manner.

The herbicidal compounds of formula (I) of the present invention show excellent controlling effect against a wide range of weeds on the lawn and gives no or reduced phytotoxicity to "lawn species" such as Cynodon spp, Pasapalum notatum, Zoysia spp., Stenotaphrum americanum, Axonopus spp., Eremochloa optiuroides, Pennisetum clandestinum, Festuca rubra, Festuca arundinacea, Agrostis stolonifera, Agrostis tenuis, Poa pratense, Lolium perenne. Consequently, the compounds (I) can be applied as an excellent, selective herbicide for the lawn in cultures of transgenic or non-transgenic lawn, like in pre-seedling, pre-emergent or post-emergent application control.

The compounds of the formula (I) and their salts, all termed herein below as compounds of formula (I), have an excellent herbicidal activity against a broad range of economically important monocotyledonous and dicotyledonous harmful plants. The compounds of formula (I) also act efficiently on perennial weeds which produce shoots from rhizomes, root stocks or other perennial organs and which are diffcult to control. In this context, the substances can be applied pre-planting, pre-emergence or post-emergence.

The herbicidal compounds of formula (I) mentioned above show an excellent and desirable effect in terms of weed controlling on the lawn or turf without or substantial without injury to the lawn or turf.

The terms "lawn" or "turf' are used in the following for describing more or less the same types of plant species which can be used for generating a high quality lawn or turf. Therefore, when using the term "lawn" only, it defines plant species which can be used for turf as well and vice versa.

According to the invention, by "turfgrass" there is understood an annual or perennial Gramineae, said gramineae preferably belongs to one or more of the genera Agropyron, Agrostis, Axonopus, Bromus, Buchloe, Cynodon, Eremochloa, Festuca, Lolium, Paspulum, Pennisetum, Phleum, Poa, Stenotaphrum or Zoysia. More preferably, said gramineae belongs to one or more of the genera Agrostis, Buchloe, Cynodon, Eremochloa, Festuca, Lolium, Paspulum, Pennisetum, Poa, Stenotaphrum or Zoysia. According to the invention by "turf' is understood as a group of turfgrass, which covers a surface area of ground and is subject to regular maintenance.

The present invention can be practiced with all turfgrasses including there varieties and hybrids, including cool season turfgrass and warm season turfgrass.

Examples of cool season turfgrasses are: Bluegrasses (Poa L.), such as Kentucky Bluegrass (Poa pratensis L.), Rough Bluegrass (Poa trivialis L.), Canada Bluegrass (Poa compressa L.), Poa supina and Annual Bluegrass (Poa annua L.); Bentgrasses (Agrostis L.), such as Creeping Bentgrass (Agrostis palustris Huds.), Colonial Bentgrass (Agrostis tenius Sibth.), Velvet Bentgrass (Agrostis canina L.) and Redtop (Agrostis alba L.)-, Fescues (Festuca L.), such as Creeping Red Fescue (Festuca rubra L.), Chewings Fescue (Festuca rubra var. commutata Gaud.), Sheep Fescue (Festuca ovina L.), Hard Fescue (Festuca longifolia), Tal[ Fescue (Festuca arundinacea Schreb.), Meadow Fescue (Festuca elatior L.); Ryegrasses (Lolium L.), such as Perennial Ryegrass (Lolium perenne L.), Annual (Italian) Ryegrass (Lolium multiflorum Lam.); \A/heatgrasses (Agropyron Gaertn.), such as Fairway Wheatgrass (Agropyron cristatum (L.) Gaertn.), Western Wheatgrass (Agropyron smithii Rydb.). Other cool season turfgrasses include Smooth Brome (Bromus inermis Leyss.) and Timothy (Phleum L.).

Examples of warm season turfgrasses are Bermudagrasses (Cynodon L. C. Rich), Zoysiagrasses (Zoysia Willd.), St. Augustinegrass (Stenotaphrum secundatum (Watt.) Kuntze), Centipedegrass (Eremochloa ophiuroides (Munro.) Hack.), Carpetgrass (Axonopus Beauv.), Bahiagrass (Paspalum notatum Flugge.), Kikuyugrass (Pennisetum clandestinum Hochst. ex Chiov.), Buffalograss (Buchloe dactyloides (Nutt.) Engelm.) and Seashore paspalum (Paspalum vaginatum swartz).

The herbicidal compounds (I) of the present invention can be used for controlling various kinds of weeds developing on the lawn or turf.

As examples of the weeds to be controlled there can be mentioned the following: Monocotyledonous weeds such as: Digitaria ciliayis (Retz.) Koeler, Eleusine indica (L.) Gaertn., Digitaria sanguinalis (L) Scop. Setaria viridis (L.) Beauv. var. viridis, Poa annua L., Alopecurus aequalis Sobol. var. amurensis, Imperata cylindrica (L.) Beau., Luzula capitata (Mig.) Mig, Cyperus rotundus L., Cyperus brevifolius (Rottb.) Hassk. var. leiolepis, Digitaria radicosa (Presl) Mig., Digitaria violascens Link), Setaria faberii Herrm, Holcus lanatus, etc.

Dicotyledonous weeds such as: Rumex japonicus Houtt., Portulaca oleracea L. var. oleracea, Stellaria neglecta Weihe, Kummerowia striata (Thunb. ex Murray) Schindl., Euphorbia supina Rafin, Galinsoga ciliata (Rafin.) Blake, Cerastium glomeratum Thuill., Stellaria alsine Grimm. var. undulata (Thunb. ex Murray) Ohwi, Cardamine flexuosa With., Capsella bursa-pastoris Medicus, Lamium amplexicaule L., Veronica persica Poir., Veronica filiformis, Aster maaekii Regel, Oxalis corniculata L., Hydrocotyle sibthorpioides Lam., Plantago asiatica L., Plantago lanceolata L., Plantago media, Plantago major, Artemisia indica Willd. var. maximowiczii (Nakai) Hara, Erigeron philadelphicus L., Rumex acetosa L., Taraxacum officinale Weber, Bellis perennis, Achilea millefolia , Crepis capillaris, Prunella vulgaris, Ranunculus repens, Ranunculus acris" Trifolium repens, Trifolium dubium, Potentilla spp..etc.

The use of the herbicidal compounds of formula (I), however, should not be restricted to these weeds in any way, but can be applied against other weeds in the same manner.

If the compounds according to the invention are applied to the soil surface before germination (pre-emergence of the weeds), then the weed seedlings are either prevented completely from emerging or the weeds grow until they have reached the cotyledon stage, but then their growth stops and they finally die completely after three to four weeks have elapsed.

When the active substances are applied post-emergence to the green parts of the plants, growth stops over time after treatment and the weed plants remain at the stage of growth at the time of application, or they die completely after a certain time, so that in this manner competition by the weeds, which is harmful to the lawn or turfgrass, is eliminated at a very early stage and in a sustained manner.

Although the compounds according to the invention have an excellent herbicidal activity against mono- and dicotyledonous weeds, important plant varieties for lawn and turf are not damaged at appropriate dosages when applied before or after emergence of the turfgrasses. For these reasons, the present compounds are suitable for the selective control of undesired vegetation on lawn or turf or the soil where the lawn or turf is grown.

The activity allows to apply the compounds as effective herbicidal active ingredients pre- and post-emergence for controlling broad-leaved weeds and grass weeds as a selective herbicide

The term "locus" of a plant or plants comprises the plant or plants, part of the plants, seed of the plants or the area where the plants are growing. Such plants can be weed plants or the plants of lawn or turf or both types of plants. Particularly, the "locus of turfgrass" as used herein is intended to embrace the place on which the turfgrass are growing, the place where the seeds of the turfgrass are sown or the place where the seeds of the turfgrass will be placed for subsequent plant growth. According to the invention, the "locus of a turf' can relate to soil or to a substrate. An example for such a locus is a golf course, on which turfgrass is managed.

According to the invention the term "soil" means natural soil, which is typically present on a land area, such as soil being present on a golf course, or means soil, that has been modified, such as soil being granulated and/or treated with agrochemicals, such as for example fertilizers.

According to the invention the term "substrate" means a medium for the growth of turfgrass and the like, suited for application to a variety of existing ground structures. Typically, such mediums are soil-free mixtures that include sufficient proportions of ingredients of elastomeric granules, suitable binding emulsion, mineral aggregate, filier and controlled release plant nutrient particles, so that when laid and cured, said mixture produces a water permeable, resilent substrate having air pockets through which a root system of turfgrass can penetrate. Turfgrass growing on said substrate can form a turf, which can be applied to non-porous surfaces, such as for example roofs of buildings, terraces and other hard surface areas, or to porous surfaces, such as for example football fields or golf courses. Elastomeric granules can be, for example, granules of rubber, granules of recycled vehicle tyre rubber or mixtures thereof.

The compounds of formula (I) according to the invention are applied to the weed and turfgrass plants or seed thereof by treating the locus thereof with an agricultural composition comprising one or more compounds of formula (I) or salts thereof.

The amount of compounds of formula (I) to be applied will depend on various factors, such as the subject of the treatment, such as, plants or soil, the type of treatment, such as, for example spraying or spreading, the purpose of the treatment, such as, for example preventive or curative, the application time; environmental conditions or turfgrass species.

The compounds of formula (I) according to the invention can be applied to the locus of the lawn or turf with a composition ("composition according to the invention") comprising one or more compounds of formula (I) or salts thereof. Within said embodiment of the invention, the compounds of formula (I) or compositions according to the invention are preferably applied to the locus of the lawn or turf by spraying or drenching liquid (sprayable) formulations or dissolvable or dispersing formulations. Spray and drench application with water volumes from 50 -10000 liter /ha applied with all common application equipment like large motor driven professional spray equipment, knapsack sprayer, hose end applicators, RTU pump sprayers, arerosol cans, ULV applicators or watering cans.

Furthermore the herbicidal compounds of formula (I) can be applied by spreading or granular (active ingredient on inert or active ingredient on fertilizer) formulations. It is also possible to water in the product after applications with additional irrigations for all application methods.

In one embodiment, the compositions are applied to the (locus of the) weed plants and turfgrass as a sprayable liquid formulation. In another embodiment, the compositions are applied to the (locus of the) weed plants and turfgrass as a granular formulation. Suitable granules include inert and fertilizer granules. The active ingredient may be dispersed throughout, impregnated into, or coated on the surface of the granules. Treatment of turfgrass may be performed by lawn care operators, greenkeepers or home owners.

To maintain high quality, healthy turfgrass on the intended surface area of ground, such as for example, a golf course, a sports field, a park area or a home lawn, and to protect said turfgrass against weed plants, the compositions according to the invention are applied to the turf once or more than once during maintenance of the turfgrass. Preferably, the compositions according to the invention are applied to the turfgrass once or more than once during a growing season of the turfgrass.

The composition according to the invention may be applied to the locus of the turfgrass before ("preventive treatment") or after emergence of the weeds ("curative treatment"). For example, the compositions according to the invention can be applied to the soil before or after the seeds of the turfgrass are sown or placed into the soil; or the compositions according to the invention can be applied to a substrate for the growth of turfgrass before or after the seeds of the turfgrass are placed into the substrate; or the compostions according to the invention can be applied to the soil before turfgrass grown on a substrate are placed on top of the soil together with the substrate.

With the composition according to the invention it is possible to inhibit or destroy the weed plants which occur on turfgrass, while the parts of turfgrass existing or which grow later are not substantially damaged.

The application rates for the herbicidal compounds of formula (I) or salts thereof can vary within a broad range and generally depend on the weed spectrum to be controlled, the soil type and weather conditions or whether the compounds are combined with other herbicidal active ingredients. Suitable applications rates generally are within the range of from 0.001 to 2000 g active ingredient (= compounds (I)) per hectare (a.i./ha), preferably of from 0.005 to 500 g a.i./ha, more preferably 0.01 bis 250 g a.i./ha It is also possible to use the compounds of formula (1) in combination with other pesticidally active substances or nutritients, such as, for example, insecticides, acaricides, herbicides, fungicides, safeners, fertilizers and/or growth regulators.

The invention thus also relates to a method of controlling weeds in lawn or turf which comprises applying one or more type (A) herbicides, optionally together, before or after the treatment with one or more other active ingredients selected from the group consisting of type (B) herbicides and other type (C) active ingredients useful in the treatment of lawn or turf, to the weeds, parts of the weed plants or the area under cultivation where the plants of lawn or turf are growing or to be sown.

Type (A) herbicides are the compounds of formula (I) or their salts.

Type (B) herbicides are other herbicides useful to be combined with compounds of formula (I) for the purpose of broadening weed spectrum to be controlled, or increasing herbicidal effect (some possible type B herbicides are mentioned further below).

Type (C) active ingredients useful in the treatment of lawn or turf can be, for instance, insecticides, acaricides, fungicides, safeners, fertilizers and/or growth regulators or nutrients useful for treating lawn or turf against phytopathogenic diseases or for growth regulation or growth promotion of lawn or turf.

Type (B) herbicides are other herbicides useful to be combined with compounds of formula (I) for the purpose of broadening weed spectrum to be controlled, or increasing herbicidal effect (some possible type B herbicides are mentioned further below).

Possible combination partners for the inventive active ingredients, in mixed formulations or in a tankmix, are, for example, known active ingredients which are based on inhibition of, for example, acetolactate synthase, acetyl-coenzyme A carboxylase, PS I, PS II, HPPDO, phytoene desaturase, protoporphyrinogen oxidase, glutamine synthetase, cellulose biosynthesis, 5-enolpyruvylshikimate-3-phosphate synthetase. Such compounds, and also other usable compounds, with a mechanism of action that is, in some cases, unknown or different, are described, for example, in Weed Research 26, 441-445 (1986), or "The Pesticide Manual", 14th edition 2006/2007, published by the British Crop Protection Council (hereinafter also abbreviated to "PM"), "The e-Pesticide Manual", version 4.0 2006/2007, published by the British Crop Protection Council and literature cited there, "Compendium of Pesticide Common Names" available from the internet (http://www.alanwood.net/pesticides/).

Herbicides, plant growth regulators and herbicide safeners, which are known from the literature and which can be combined with the compounds of the formula (I), include, for example, the following active ingredients (note: the compounds are either referred to by the common name in accordance with the International Organization for Standardization (ISO) or by the chemical name, if appropriate together with a customary code number): acetochlor; acibenzolar; acibenzolar-S-methyl; acifluorfen; acifluorfen-sodium; aclonifen; alachlor; allidochlor; alloxydim; alloxydim-sodium; ametryn; amicarbazone, amidochlor, amidosulfuron; aminocyclopyrachlor, aminopyralid; amitrole; ammoniumsulfamate; ancymidol; anilofos; asulam; atrazine; azafenidin, azimsulfuron; aziprotryn; BAH-043; BAS-140H, BAS-693H; BAS-714H; BAS-762H; BAS-776H; beflubutamid, benazolin; benazolin-ethyl; bencarbazone; benfluralin; benfuresate; benoxacor; bensulfuron; bensulfuron-methyl; bensulide; bentazone; benzfendizone, benzobicyclon, benzofenap; benzofluor; benzoylprop; benzoyl prop-ethyl; bialaphos; bifenox; bilanafos (bialaphos); bilanafos-sodium; bispyribac; bispyribac-sodium, bromacil; bromobutide; bromofenoxim; bromoxynil; bromuron; buminafos; busoxinone; butachlor; butafenacil, butamifos; butenachlor; butralin; butroxydim, butylate; cafenstrole; carbetamide; carfentrazone; carfentrazone-ethyl; chlomethoxyfen; chloramben; chlorazifop; chlorazifop-butyl; chlorbromuron; chlorbufam; chlorfenac; chlorfenac-sodium; chlorfenprop; chlorflurenol; chlorflurenol-methyl; chloridazon; chlorimuron; chlorimuron-ethyl; chlormequat-chloride; chlomitrofen; chlorphthalim; chlorthal-dimethyl; chlorotoluron; chlorpropham; chlorsulfuron; chlorthal-dimethyl; chlorthiamid; chlortoluron, cinidon; cinidon-ethyl, cinmethylin; cinosulfuron; clethodim; clodinafop; clodinafop-propargyl; clofencet; clomazone; clomeprop; cloprop; clopyralid; clopyrasulfuron; clopyrasulfuron-methyl; cloquintocet; cloquintocet-mexyl; cloransulam; cloransulam-methyl, CMA, cumyluron; cyanamide, cyanazine; cyclanilide; cycloate; cyclosulfamuron; cycloxydim; cycluron; cyhalofop; cyhalofop-butyl; cyperquat; cyprazine; cyprazole; cyprosulfamide; 2,4-D; 2,4-DB; daimuron (dymron); dalapon; daminozide; dazomet; n-decanol; desmedipham; desmetryn; detosyl-pyrazolate (DTP); di-allate; dicamba; dichlobenil; dichlormid; dichlorprop; dichlorprop-P; diclofop; diclofop-methyl; diclofop-P; diclofop-P-methyl; diclosulam, diethatyl; diethatyl-ethyl; difenoxuron; difenzoquat; diflufenican; diflufenzopyr; diflufenzopyr-sodium; dikegulac-sodium; dimefuron; dimepiperate, dimethachlor; dimethametryn; dimethazone; dimethenamid; dimethenamid-P; dimethipin; dimetrasulfuron; dimexyflam; dinitramine; dinoseb; dinoterb; diphenamid; dipropetryn; diquat; diquat-dibromide; dithiopyr; diuron; DNOC; DSMA, eglinazine-ethyl; endothal; epoprodan, EPTC; esprocarb; ethalfluralin; ethametsulfuron-methyl; ethephon, ethidimuron; ethiozin; ethofumesate; ethoxyfen; ethoxyfen-ethyl; ethoxysulfuron, etobenzanid; F5231, i.e. N-[2-chloro-4-fluoro-5-[4-(3-fluoropropyl)-4,5-dihydro-5-oxo-1H-tetrazol-1-yl]phenyl]ethanesulfonamide; fenchlorazole(-ethyl), fenclorim; fenoprop; fenoxan; fenoxaprop; fenoxaprop-ethyl; fenoxaprop-P; fenoxaprop-P-ethyl; fenoxydim; fentrazamide, fenuron; flamprop; flamprop-methyl; flamprop-M-isopropyl; flamprop-M-methyl; flazasulfuron; floazulate, florasulam, fluazifop; fluazifop-butyl; fluazifop-P; fluazifop-P-butyl; fluazolate; flucarbazone; flucarbazone-sodium, flucetosulfuron, fluchloralin; flufenacet (thiafluamide, fluthiamide); flufenpyr; flufenpyrethyl; flumetralin, flumetsulam; flumiclorac; flumiclorac-pentyl, flumioxazin; flumipropyn; fluometuron, fluorochloridone, fluorodifen; fluoroglycofen; fluoroglycofen-ethyl; flupoxam; flupropacil; flupropanate; flupyrsulfuron; flupyrsulfuron-methyl-sodium; flurazole; flurenol; flurenol-butyl; fluridone; flurochloridone; fluroxypyr; fluroxypyr-meptyl; flurprimidol, flurtamone; fluthiacet; fluthiacet-methyl; fluthiamide; fluxofenim; fomesafen; foramsulfuron; forchlorfenuron, fosamine; furilazole, furyloxyfen; gibberillic acid; glufosinate; glufosinate-ammonium; glufosinate-P; glufosinate-P-ammonium; glufosinate-sodium; glufosinate-P-sodium; glyphosate; glyphosate-isopropylammonium; H-9201; halosafen; halosulfuron; halosulfuron-methyl; haloxyfop; haloxyfop-P; haloxyfop-ethoxyethyl; haloxyfop-P-ethoxyethyl; haloxyfop-methyl; haloxyfop-P-methyl; HC-252, hexazinone; HNPC-9908; HW-02; imazamethabenz; imazamethabenz-methyl; imazamox, imazapic, imazapyr; imazaquin; imazamethapyr, imazethapyr; imazosulfuron; inabenfide, indanofan, indole-3-ylacetic acid (IAA), 4-indol-3-ylbutyric acid (IBA); iodosulfuron; iodosulfuron-methyl-sodium; ioxynil; ipfencarbazone; isocarbamid; isopropalin; isoproturon; isouron; isoxaben; isoxachlortole; isoxadifen; isoxadifen-ethyl; isoxaflutole, isoxapyrifop; KUH-043; KUH-071; karbutilate; ketospiradox; lactofen; lenacil; linuron; maleic hydrazide, MCPA; MCPB; MCPB-methyl, -ethyl, and -sodium; mecoprop; mecoprop-sodium; mecoprop-butotyl; mecoprop-P; mecoprop-P-butotyl; mecoprop-P-dimethylammonium; mecoprop-P-2-ethylhexyl; mecoprop-P-potassium; mefenacet; mefenpyr; mefenpyr-diethyl; mefluidide; mepiquat-chloride; mesosulfuron; mesosulfuron-methyl; mesotrione; metam, metamifop, metamitron; metazachlor; methabenzthiazuron; methazole; methoxyphenone; 1-methylcyclopropene; methyldymron; methyl isothiocyanate; metobenzuron, metobromuron; metolachlor; S-metolachlor; metosulam; metoxuron; metribuzin; metsulfuron; metsulfuron-methyl; molinate; monalide; monocarbamide ; monocarbamide dihydrogensulfate; monolinuron; monuron; MT 128, i.e. 6-chloro-N-(3-chloro-2-propenyl)-5-methyl-N-phenyl-3-pyridazinamine; MSMA, MT 5950, i.e. N-[3-chloro-4-(1-methylethyl)phenyl]-2-methylpentanamide; 2-(1-naphthyl)acetamide, 1-naphthylacetic acid; 2-naphthyloxyacetic acid; NGGC-011; naproanilide; napropamide; naptalam; NC 310, i.e. 4-(2,4-dichlorobenzoyl)-1-methyl-5-benzyloxypyrazole; neburon; nicosulfuron; nipyraclofen; nitralin; nitrofen; nitrophenolate-sodium (isomer mixture); nitrofluorfen; nonanoic acid; norflurazon; orbencarb; orthasulfamuron; oryzalin; oxabetrinil; oxadiargyl; oxadiazon; oxasulfuron; oxaziclomefone; oxyfluorfen; paclobutrazol; paraquat; paraquat-dichloride; pebulate; pelargonic acid; pendimethalin; pendralin; penoxsulam; pentachlorophenol; pentanochlor; pentoxazone; perfluidone; pethoxamid, phenisopham; phenmedipham; phenmedipham-ethyl; picloram; picolinafen, pinoxaden, piperophos; piributicarb; pirifenop; pirifenop-butyl; pretilachlor; primisulfuron; primisulfuron-methyl; probenazole; procyazine; prodiamine; profluralin; profoxydim; prohexadione; prohexadione-calcium, prohydrojasmon; prometon; prometryn; propachlor; propanil; propaquizafop; propazine; propham; propisochlor; propoxycarbazone; propoxycarbazone-sodium; n-propyl dihydrojasmonate; propyzamide; prosulfalin; prosulfocarb; prosulfuron; prynachlor; pyraclonil; pyraflufen;
pyraflufen-ethyl; pyrasulfotole; pyrazolynate (pyrazolate); pyrazosulfuron; pyrazosulfuron-ethyl; pyrazoxyfen; pyribambenz; pyribambenz-isopropyl; pyribenzoxim; pyributicarb; pyridafol; pyridate; pyriftalid; pyriminobac; pyriminobac-methyl; pyrimisulfan, pyrithiobac; pyrithiobac-methyl; pyrithiobac-sodium (KIH-2031); pyroxasulfone; pyroxsulam; quinclorac; quinmerac; quinoclamine; quinofop and its ester derivatives; quizalofop; quizalofop-ethyl; quizalofop-P; quizalofop-P-ethyl; quizalofop-P-tefuryl; renriduron; rimsulfuron; saflufenacil; secbumeton; sethoxydim; siduron; simazine; simetryn; sintofen; SN 106279, i.e. 2-[[7-[2-chloro-4-(trifluoromethyl)phenoxy]-2-naphthalenyl]oxy]propanoic acid and its methyl ester; sulcotrione; sulfallate (CDEC); sulfentrazone; sulfazuron; sulfometuron; sulfometuron-methyl; sulfosate (glyphosate-trimesium); sulfosulfuron; SYN-449; SYN-523; SYP-249; SYP-298; SYP-300; 2,3,6-TBA; TCA; tebutam; tebuthiuron; tecnazene; tefuryltrione; tembotrione; tepraloxydim; terbacil; terbucarb; terbuchlor; terbumeton; terbuthylazine; terbutryn; TH 547; thenylchlor; thiafluamide; thiazafluron; thiazopyr; thidiazimin; thidiazuron; thiencarbazone; thiencarbazone-methyl; thifensulfuron; thifensulfuron-methyl; thiobencarb; TI-35; tiocarbazil; topramezone; tralkoxydim; tri-allate; triasulfuron; triaziflam; triazofenamide; tribenuron; tribenuron-methyl; trichloroacetic acid (TCA); triclopyr; tridiphane; trietazine; trifloxysulfuron; trifloxysulfuron-sodium; trifluralin; triflusulfuron; triflusulfuron-methyl; trimeturon; trinexapac; trinexapac-ethyl; tritosulfuron; tsitodef; uniconazole;
uniconazole-P; vernolate; ZJ-0166; ZJ-0270; ZJ-0862; and the following compounds (see chemical formulae below):

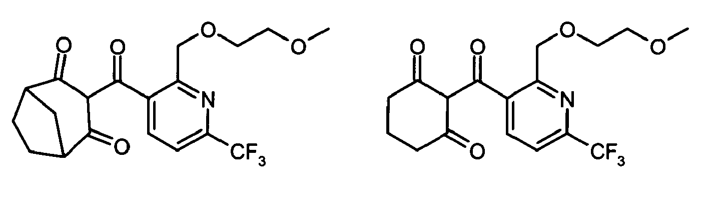

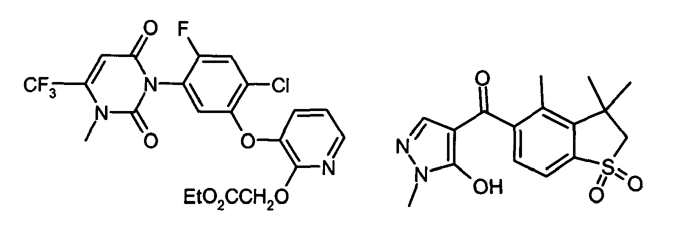

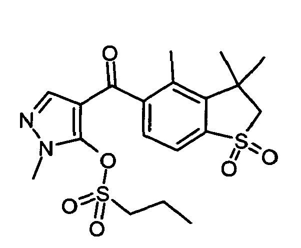

Preferred are the herbicide combinations (A) + (B) comprising one or more of the compounds of formula (I) or salt thereof (= herbicides (A)) with herbicides (B) selected from the group consisting of, for example, the carbamates, thiocarbamates, haloacetanilides, substituted phenoxy-, naphthoxy- and phenoxyphenoxycarboxylic acid derivatives and heteroaryloxyphenoxyalkanecarboxylic acid derivatives, such as quinolyloxy-, quinoxalyloxy-, pyridyloxy-, benzoxazolyloxy- and benzothiazolyloxyphenoxyalkanecarboxylic acid esters, cyclohexanedione oximes, benzoylcyclohexanediones, benzoylisoxazoles, benzoylpyrazoles, imidazolinones, pyrimidinyloxypyridinecarboxylic acid derivatives, pyrimidyloxybenzoic acid derivatives, sulfonylureas, sulfonylaminocarbonyltriazolinones, triazolopyrimidinesulfonamide derivatives, phosphinic acid derivatives and salts thereof, glycine derivatives, triazolinones, triazinones and also S-(N-aryl-N-alkylcarbamoylmethyl)dithiophosphoric esters, pyridinecarboxylic acids, pyridines, pyridinecarboxamides, 1,3,5-triazines and others.

Preference is given here to phenoxyphenoxy- and heteroaryloxyphenoxycarboxylic acid esters and salts, cyclohexanedione oximes, benzoylcyclohexanediones, benzoylisoxazoles, benzoylpyrazoles, sulfonylureas, sulfonylaminocarbonyltriazolinones, imidazolinones and mixtures of the active compounds mentioned with one another and/or with active compounds used for broadening the activity spectrum of the herbicides, for example bentazone, cyanazine, atrazine, bromoxynil, dicamba and other leaf-acting herbicides.

Preferred are the herbicide combinations (A) + (B) comprising one or more of the compounds of formula (I) or salt thereof with one or more herbicides (B) selected from the group consisting of:

| | |
|---|---|
| (B1) | 2,4-D and esters and salts thereof, |
| (B2) | Amidosulfuron or salts thereof, such as (B2.1) Amidosulfuron, |
| (B3) | Aminocyclopyrachlor or salts or esters thereof, such as (B3.1) Aminocyclopyrachlor, (B3.2) Aminocyclopyrachlor-methyl, |
| (B4) | Aminopyralid or salts thereof, such as (B4.1) Aminopyralid, |
| (B5) | Bromoxynil or esters thereof, such as (B5.1) Bromoxynil, (B5.2) Bromoxynil-heptanoate, (B5.3) Bromoxynil-octanoate, |
| (B6) | Diflufenican, |
| (B7) | Ethofumesate, |
| (B8) | Ethoxysulfuron or salts thereof, such as (B8.1) Ethoxysulfuron, (B8.2) Ethoxysulfuron-sodium, |
| (B9) | Fluroxypyr or esters thereof, such as (B9.1) Fluroxypyr, (B9.2) Fluroxypyr-meptyl, (B9.3) Fluroxypyr-2-butoxy-1-methylethyl, |
| (B10) | Fatty acids, such as (B10.1) acetic acid, |
| (B11) | Glufosinate or salts thereof, such as (B11.1) Glufosinate, (B11.2) Glufosinate-ammonium, (B11.3) Glufosinate-sodium, |
| (B12) | Glufosinate-P (= L-Glufosinate or phosphinothricin) or salts thereof, such as (B12.1) Glufosinate-P, (B12.2) Glufosinate-P-sodium, (B12.3) Glufosinate-P-ammonium, |
| (B13) | Glyphosate or salts thereof, such as (B13.1) Glyphosate, (B13.2) Glyphosate-sodium, (B13.3)Glyphosate-potassium, (B13.4) Glyphosate-ammonium, (B13.5) Glyphosate-diammonium, (B13.6) Glyphosate-isopropylammonium, |
| (B14) | lodosulfuron and esters and salts thereof, such as (B14.1) lodosulfuron, (B14.2) lodosulfuron-methyl, (B14.3) lodosulfuron-methyl-sodium, |
| (B15) | Mesosulfuron and esters or salts thereof, such as (B15.1) Mesosulfuron, (B15.2) Mesosulfuron-methyl, |
| (B16) | Metosulam, |
| (B17) | Paraquat and salts thereof, such as (B17.1) Paraquat-dichloride, |
| (B18) | Penoxsulam and salts thereof, such as (B18.1) Penoxsulam, |
| (B19) | Picloram and esters and salts thereof, such as (B19.1) Picloram, (B19.2) Picloram-potassium, (B19.3) Picloram-dimethylammonium, (B19.4) Picloram-triisopropylammonium, (B19.5) Picloram-triethanolammonium, (B19.6) Picloram-triisopropanolammonium, (B19.7) Picloram-isooctyl, |
| (B20) | Pyrasulfotole and salts thereof, such as (B20.1) Pyrasulfotole, |
| (B21) | Pyroxasulfone (KIH-485) and salts thereof, such as (B21.1) Pyroxasulfone, |
| (B22) | Pyroxsulam and salts thereof, such as (B22.1) Pyroxulam, |
| (B23) | Rimsulfuron and salts thereof, such as (B23.1) Rimsulfuron, |
| (B24) | Saflufenacil and salts thereof, such as (B24.1) Saflufenacil, |
| (B25) | Sclerotinia (biological herbicides), |
| (B26) | SYN-449 and salts thereof, such as (B26.1) SYN-449, i. e. 4-Hydroxy-3-[[2-[(2-methoxy-ethoxy)-methyl]-6-trifluoromethyl-3-pyridinyl]-carbonyl]-bicyclo[3.2.]oct-3-en-2-on, |
| (B27) | SYN-523 and salts thereof, such as (B27.1) SYN-523, i. e. [[3-[2-Chlor-5-[3,6-dihydro-3-methyl-2,6-dioxo-4-(trifluormethyl)-1(2Hrpyrimidinyl]-4-fluorphenoxy]-2-pyridinyl]oxy]-essigsaureethylester, |
| (B28) | Tembotrione and salts thereof, such as (B28.1) Tembotrione, |
| (B29) | Thiencarbazone and esters and salts thereof, such as (B29.1) Thiencarbazone, (B29.2) Thiencarbazone-methyl, (B29.3) Thiencarbazone-methyl-sodium, |
| (B30) | Thifensulfuron and esters and salts thereof, such as (B30.1) Thifensulfuron, (B30.2) Thifensulfuron-methyl, (B30.3) Thifensulfuron-methyl-sodium, |
| (B31) | Tribenuron and esters and salts thereof, such as (B31.1) Tribenuron, (B31.2) Tribenuron-methyl, (B31.3) Tribenuron-methyl-sodium, |
| (B32) | Trifloxysulfuron and salts thereof, such as (B32.1) Trifloxysulfuron, (B32.2)Trifloxysulfuron-sodium, |
| (B33) | Dicamba and esters and salts thereof, such as (33.1) Dicamba, (33.2) Dicamba-sodium, (33.3) Dicamba-potassium, (33.4) Dicamba-dimethylammonium, (33.5) Dicamba-isopropylammonium, (33.5) Dicamba-diglycolamin salt, (33.4) Dicamba-butotyl, |
| (B34) | Mecoprop and Mecoprop-P, and esters and salts thereof, such as (34.1) Mecoprop and esters and salts thereof, (34.2) Mecoprop-P and esters and salts thereof. (34.3) Mecoprop, (34.4) Mecoprop-P, (34.5) Mecoprop-sodium, (34.6) Mecoprop-butotyl, (34.7) Mecoprop-P, (34.8) Mecoprop-P-sodium, (34.9) Mecoprop-P-potassium, (34.10) Mecoprop-P-butotyl, (34.11) Mecoprop-P-2-ethyl-hexyl, |
| (B35) | MCPA and esters and salts thereof, such as (35.1) MCPA, (35.2) MCPA-sodium, (35.3) MCPA-potassium, (35.4) MCPA-dimethylammonium, (35.5) Mecoprop-P-2-ethyl-hexyl, |
| (B36) | Fenoxaprop and esters and salts thereof, such as (36.1) Fenoxaprop, (36.2) Fenoxaprop-ethyl, |
| (B37) | Fenoxaprop-P, and esters and salts thereof, such as (36.1) Fenoxaprop-P, (37.2) Fenoxaprop-P-ethyl, |
| (B38) | Carfentrazone, and esters and salts thereof, such as (38.1) Carfentrazone, (38.2) Carfentrazone-ethyl, |
| (B39) | Sulfentrazone and salts thereof, such as (39.1) Sulfentrazone, |
| (B40) | Oxadiazon and salts thereof, such as (40.1) Oxadiazon, |
| (B41) | Metsulfuron and esters and salts thereof, such as (41.1) Metsulfuron, (41.2) Metsulfuron-methyl, |
| (B42) | Triclopyr and esters and salts thereof, such as (42.1) Triclopyr, (43.2) Triclopyr-triethylammonium, (42.3) Triclopyr-butotyl, and |
| (B43) | Foramsulfuron or salts thereof, such as (43.1) Foramsulfuron. |

Some of said compounds belong to the same structural type or same type of mode of action or both. In such cases herbicidal properties of combinations (A) with other herbicides (B) are similar if these herbicides belong to the same structural type and/or mode of action compared with the herbicidal combinations (A) + (B) specifically mentioned above and below.

Salts are generally agriculturally applicable salts, preferably metal salts such as alkaline metal salts, or optionally substituted ammonium salts, such as ammonium salts, mono-, di- or tri-alkyl or -hydroxyalkylammonium salts.

The combination herbicides are described in the references mentioned above (Pesticide Manual etc.); other references are provided in the following:

| | |
|---|---|
| (B3) | Aminocyclopyrachlor and salts thereof, preferably (B3.1) Aminocyclopyrachlor, i. e. 6-amino-5-chlor-2-cyclopropyl-pyrimidin-4-carboxylic acid [CAS-Reg. 858958-08-8]; |
| (B18) | Penoxsulam and salts thereof, preferably (B18.1) Penoxsulam, i. e. 2-(2,2-difluoroethoxy)-N-(5,8-dimethoxy[1,2,4]tdazolo[1,5-c]pydmidin-2-yl)-6-(trifluormethyl)benzolsulfonamid [CAS-Reg. 219714-96-2]; |
| (B20) | Pyrasulfotole and salts thereof, preferably (B20.1) (5-hydroxy-1,3-dimethyl-1H-pyrazol-4-ylf[2-(methylsulfonyl)-4-(trifluoromethyl)-phenyl]-methanone [CAS-Reg. 365400-11-9]; |
| (B21) | Pyroxasulfone (KIH-485) and salts thereof, preferably (B21.1) Pyroxasulfone, i. e. 3-[5-(difluoromethoxy)-1-methyl-3-(trifluoromethyl)pyrazol-4-ylmethylsulfonyl]-4,5-dihydro-5,5-dimethyl-1,2-oxazol [CAS-Reg. 447399-55-5]; |

| | |
|---|---|
| (B22) | Pyroxsulam and salts thereof, preferably (22.1) Pyroxsulam, i. e. N-(5,7-dimethoxy[1,2,4]triazolo[1,5-a]pyrimidin-2-yl)-2-methoxy-4-(trifluormethyl)pyridin-3-sulfonamide [CAS-Reg. 422556-08-9]; |
| (B24) | Saflufenacil and salts thereof, preferably (B24.1) Saflufenacil (BAS-H800), i. e. 2-chloro-5-[3,6-dihydro-3-methyl-2,6-dioxo-4-(trifluoromethyl)-1(2H)-pyrimidinyl]-4-fluoro-N-[[methyl(1-methylethyl)amino]-sulfonyl]-benzamide [CAS-Reg. 372137-35-4] (WO 2001/083459); |
| (B26), | preferably (B26.1) SYN-449, i. e. 4-hydroxy-3-[[2-[(2-methoxy-ethoxy)-methyl]-6-trifluoromethyl-3-pyridinyl]-carbonyl]-bicyclo[3.2.1]oct-3-en-2-one (CAS RN 352010-68-5, is known from WO-A-2006/097322, WO-A-01/94339; |
| (B27), | preferably (B27.1), SYN-523 is known from WO 2006/061562, EP 1122244; |
| (B28) | Tembotrione and salt thereof are known from WO-A-00/21924, preferably (B28.1) Tembotrione, i. e. 2-{2-chloro-4-mesyl-3-[(2,2,2-trfluorethoxy)methyl]-benzoyl}-cyclohexan-1,3-dion [CAS-Reg. 335104-84-2]; |
| (B29) | Thiencarbazone and salts thereof are known from WO 01/05788, preferably (B29.1) Thiencarbazone, i. e. 4-[(4,5-dihydro-3-methoxy-4-methyl-5-oxo-1H-1,2,4-triazol-1-yl)-carbonyl-sulfamoyl]-5-methylthiophen-3-carbonic acid, more preferably (B29.2) Thiencarbazone-methyl, i. e. the methyl ester thereof [CAS-Reg. 317815-83-1] or (B29.3) Thiencarbazone-methyl-sodium, i. e. the sodium salt of (B29.2). |

Preferred are combinations of a compound of general formula (I) selected from the list of compounds of table A (i.e. compounds A1 to 145, with compounds A1, A3, A8, A9, A10, A11, A12, A14, A21, A22, A23, A28, A30, A51, A52, A60, A70, A142, A143 and

A145 being particularly preferred) and a herbicide (B) and agronomically useful salts of these compounds as follows:
(A) + (B1), (A) + (B2), (A) + (B2.1), (A) + (B3), (A) + (B3.1). (A) + (B3.2),
(A) + (B4), (A) + (84.1), (A) + (B5), (A) + (B5.1), (A) + (B5.2), (A) + (B5.3),
(A) + (B6), (A) + (B7), (A) + (B8), (A) + (B8.1), (A) + (B8.2), (A) + (B9),
(A) + (B9.1), (A) + (B9.2), (A) + (B9.3), (A) + (B10), (A) + (B10.1),
(A) + (B11), (A) + (B11.1), (A) + (B11.2), (A) + (B11.3), (A) + (B12),
(A) + (B12.1), (A) + (B12.2), (A) + (B12.3), (A) + (B13), (A) + (B13.1),
(A) + (B13.2), (A) + (B13.3), (A) + (B13.4), (A) + (B13.5), (A) + (B13.6),
(A) + (B14), (A) + (B14.1), (A) + (B14.2), (A) + (B14.3), (A) + (B15),
(A) + (B15.1), (A) + (B15.2), (A) + (B16), (A) + (B17), (A) + (B17.1),
(A) + (B18), (A) + (B18.1), (A) + (B19), (A) + (B19), (A) + (B19.1),
(A) + (B19.2), (A) + (B19.3), (A) + (B19.4), (A) + (B19.5), (A) + (B19.6),
(A) + (B19.7), (A) + (B20), (A) + (B20.1), (A) + (B21), (A) + (B21.1),
(A) + (B22), (A) + (B22.1), (A) + (B23), (A) + (B23.1), (A) + (B24),
(A) + (B24.1); (A) + (B25), (A) + (B26), (A) + (B26.1), (A) + (B27),
(A) + (B27.1), (A) + (B28), (A) + (B28.1), (A) + (B29), (A) + (B29.1),
(A) + (B29.2), (A) + (B29.3), (A) + (B30), (A) + (B30.1), (A) + (B30.2),
(A) + (B30.3), (A) + (B31), (A) + (B31.1), (A) + (B31.2), (A) + (B31.3),
(A) + (B32), (A) + (B32.1), (A) + (B32.2), (A) + (B33), (A) + (B34),
(A) + (B34.1), (A) + (B34.2), (A) + (B35), (A) + (B36), (A) + (B36.1),
(A) + (B36.2), (A) + (B37), (A) + (B37.1), (A) + (B37.2), (A) + (B38),
(A) + (B38.1), (A) + (B38.2), (A) + (B39), (A) + (B39.1), (A) + (B40),
(A) + (B40.1), (A) + (B41), (A) + (B41.1), (A) + (B41.2), (A) + (B42),
(A) + (B42.1), (A) + (B42.2), (A) + (B42.3), (A) + (B43), (A) + (B43.1).

The weight ratio of Compounds (A) to pesticide can be varied within wide limits, and its optimum weight ratio depends both on the Compounds (A) and pesticide employed and on the kind of useful plants to be treated. The ratio by weight of compound(s) (A) to compound(s) (B) is, for example, 10000:1 to 1:10000, preferably 2000:1 to 1:2000, in particular 1000:1 to 1:1000.

If the compounds are combined with other herbicidal active ingredients (B) the practical application rates of herbicides (A) may generally be reduced, preferably in the range of 0.001 to 1500 g a.i./ha, more particularly of from 0.002 to 1000 g a.i./ha.

The combined application rates of compounds (A) + (B) are preferably within the range of from 0.001 to 3000 g a.i./ha, more particularly of from 0.002 to 1000 g a.i./ha.

Preferred combinations of three active ingredients are:
(A) + (B1) + (B2.1), (A) + (B1) + (B3), (A) + (B1) + (B4.1), (A) + (B1) + (B5),
(A) + (B1) + (B6), (A) + (B1) + (B7), (A) + (B1) + (B8.1), (A) + (B1) + (B9.1),
(A) + (B1) + (B9.2), (A) + (B1) + (B9.3), (A) + (B1) + (B10), (A) + (B1) + (B10.1),
(A) + (B1) + (B11), (A) + (B1) + (B11.1), (A) + (B1) + (B11.2), (A) + (B1) + (B11.3),
(A) + (B1) + (B12), (A) + (B1) + (B12.1), (A) + (B1) + (B12.2), (A) + (B1) + (B12.3),
(A) + (B1) + (B13), (A) + (B1) + (B13.1), (A) + (B1) + (B13.2), (A) + (B1) + (B13.3),
(A) + (B1) + (B13.4), (A) + (B1) + (B13.5), (A) + (B1) + (B13.6), (A) + (B1) + (B14.2),
(A) + (B1) + (B14.3), (A) + (B1) + (B15.2), (A) + (B1) + (B16), (A) + (B1) + (B17.1),
(A) + (B1) + (B18.1), (A) + (B1) + (B19), (A) + (B1) + (B20.1), (A) + (B1) + (B21.1),
(A) + (B1) + (B22.1), (A) + (B1) + (B23.1), (A) + (B1) + (B24.1); (A) + (B1) + (B25),
(A) + (B1) + (B26.1), (A) + (B1) + (B27.1), (A) + (B1) + (B28.1), (A) + (B1) + (B29),
(A) + (B1) + (B29.1), (A) + (B1) + (B29.2), (A) + (B1) + (B29.3), (A) + (B1) + (B30.1),
(A) + (B1) + (B31.1), (A) + (B1) + (B32.1), (A) + (B1) + (B32.2), (A) + (B1) + (B33),
(A) + (B1) + (B34), (A) + (B1) + (B34.1), (A) + (B1) + (B34.2), (A) + (B1) + (B35),
(A) + (B1) + (B36), (A) + (B1) + (B36.1), (A) + (B1) + (B36.2), (A) + (B1) + (B37),
(A) + (B1) + (B37.1), (A) + (B1) + (B37.2), (A) + (B1) + (B38), (A) + (B1) + (B38.1),
(A) + (B1) + (B38.2), (A) + (B1) + (B39), (A) + (B1) + (B39.1), (A) + (B1) + (B40),
(A) + (B1) + (B40.1), (A) + (B1) + (B41), (A) + (B1) + (B41.1), (A) + (B1) + (B41.2),
(A) + (B1) + (B42), (A) + (B1) + (B42.1), (A) + (B1) + (B42.2), (A) + (B1) + (B42.3),
(A) + (B1) + (B43), (A) + (B1) + (B43.1),
(A) + (B2.1) + (B3), (A) + (B2.1) + (B4.1), (A) + (B2.1) + (B5), (A) + (B2.1) + (B6),
(A) + (B2.1) + (B7), (A) + (B2.1) + (B8.1), (A) + (B2.1) + (B9.1), (A) + (B2.1) + (B9.2),
(A) + (B2.1) + (B9.3), (A) + (B2.1) + (B10), (A) + (B2.1) + (B10.1), (A) + (B2.1) + (B11),
(A) + (B2.1) + (B11.1), (A) + (B2.1) + (B11.2), (A) + (B2.1) + (B11.3),
(A) + (B2.1) + (B12), (A) + (B2.1) + (B12.1), (A) + (B2.1) + (B12.2),
(A) + (B2.1) + (B12.3), (A) + (B2.1) + (B13), (A) + (B2.1) + (B13.1),
(A) + (B2.1) + (B13.2), (A) + (B2.1) + (B13.3), (A) + (B2.1) + (B13.4),
(A) + (B2.1) + (B13.5), (A) + (B2.1) + (B13.6), (A) + (B2.1) + (B14.2),
(A) + (B2.1) + (B14.3), (A) + (B2.1) + (B15.2), (A) + (B2.1) + (B16),
(A) + (B2.1) + (B17.1), (A) + (B2.1) + (B18.1), (A) + (B2.1) + (B19),
(A) + (B2.1) + (B20.1), (A) + (B2.1) + (B21.1), (A) + (B2.1) + (B22.1),
(A) + (B2.1) + (B23.1), (A) + (B2.1) + (B24.1); (A) + (B2.1) + (B25),
(A) + (B2.1) + (B26.1), (A) + (B2.1) + (B27.1), (A) + (B2.1) + (B28.1),
(A) + (B2.1) + (B29), (A) + (B2.1) + (B29.1), (A) + (B2.1) + (B29.2),
(A) + (B2.1) + (B29.3), (A) + (B2.1) + (B30.1), (A) + (B2.1) + (B31.1),
(A) + (B2.1) + (B32.1), (A) + (B2.1) + (B32.2), (A) + (B2.1) + (B33),
(A) + (B2.1) + (B34), (A) + (B2.1) + (B34.1), (A) + (B2.1) + (B34.2),
(A) + (B2.1) + (B35), (A) + (B2.1) + (B36), (A) + (B2.1) + (B36.1),
(A) + (B2.1) + (B36.2), (A) + (B2.1) + (B37), (A) + (B2.1) + (B37.1),
(A) + (B2.1) + (B37.2), (A) + (B2.1) + (B38), (A) + (B2.1) + (B38.1),
(A) + (B2.1) + (B38.2), (A) + (B2.1) + (B39), (A) + (B2.1) + (B39.1),
(A) + (B2.1) + (B40), (A) + (B2.1) + (B40.1), (A) + (B2.1) + (B41),
(A) + (B2.1) + (B41.1), (A) + (B2.1) + (B41.2), (A) + (B2.1) + (B42),
(A) + (B2.1) + (B42.1), (A) + (B2.1) + (B42.2), (A) + (B2.1) + (B42.3),
(A) + (B2.1) + (B43), (A) + (B2.1) + (B43.1),

(A) + (B3) + (B4.1), (A) + (B3) + (B5), (A) + (B3) + (B6), (A) + (B3) + (B7),
(A) + (B3) + (B8.1), (A) + (B3) + (B9.1), (A) + (B3) + (B9.2), (A) + (B3) + (B9.3),
(A) + (B3) + (B10), (A) + (B3) + (B10.1), (A) + (B3) + (B11), (A) + (B3) + (B11.1),
(A) + (B3) + (B11.2), (A) + (B3) + (B11.3), (A) + (B3) + (B12), (A) + (B3) + (B12.1),
(A) + (B3) + (B12.2), (A) + (B3) + (B12.3), (A) + (B3) + (B13), (A) + (B3) + (B13.1),
(A) + (B3) + (B13.2), (A) + (B3) + (B13.3), (A) + (B3) + (B13.4), (A) + (B3) + (B13.5),
(A) + (B3) + (B13.6), (A) + (B3) + (B14.2), (A) + (B3) + (B14.3), (A) + (B3) + (B15.2),
(A) + (B3) + (B16), (A) + (B3) + (B17.1), (A) + (B3) + (B18.1), (A) + (B3) + (B19),
(A) + (B3) + (B20.1), (A) + (B3) + (B21.1), (A) + (B3) + (B22.1), (A) + (B3) + (B23.1),
(A) + (B3) + (B24.1); (A) + (B3) + (B25), (A) + (B3) + (B26.1), (A) + (B3) + (B27.1),
(A) + (B3) + (B28.1), (A) + (B3) + (B29), (A) + (B3) + (B29.1), (A) + (B3) + (B29.2),
(A) + (B3) + (B29.3), (A) + (B3) + (B30.1), (A) + (B3) + (B31.1), (A) + (B3) + (B32.1),
(A) + (B3) + (B32.2), (A) + (B3) + (B33), (A) + (B3) + (B34), (A) + (B3) + (B34.1),
(A) + (B3) + (B34.2), (A) + (B3) + (B35), (A) + (B3) + (B36), (A) + (B3) + (B36.1),
(A) + (B3) + (B36.2), (A) + (B3) + (B37), (A) + (B3) + (B37.1), (A) + (B3) + (B37.2),
(A) + (B3) + (B38), (A) + (B3) + (B38.1), (A) + (B3) + (B38.2), (A) + (B3) + (B39),
(A) + (B3) + (B39.1), (A) + (B3) + (B40), (A) + (B3) + (B40.1), (A) + (B3) + (B41),
(A) + (B3) + (B41.1), (A) + (B3) + (B41.2), (A) + (B3) + (B42), (A) + (B3) + (B42.1),
(A) + (B3) + (B42.2), (A) + (B3) + (B42.3), (A) + (B3) + (B43), (A) + (B3) + (B43.1),

(A) + (B4.1) + (B5), (A) + (B4. 1) + (B6), (A) + (B4.1) + (B7), (A) + (B4.1) + (B8.1),
(A) + (B4.1) + (B9.1), (A) + (B4.1) + (B9.2), (A) + (B4.1) + (B9.3), (A) + (B4.1) + (B10),
(A) + (B4.1) + (B10.1), (A) + (B4. 1) + (B11), (A) + (B4.1) + (B11.1),
(A) + (B4.1) + (B11.2), (A) + (B4.1) + (B11.3), (A) + (B4.1) + (B12),
(A) + (B4.1) + (B12.1), (A) + (B4.1) + (B12.2), (A) + (B4.1) + (B12.3),
(A) + (B4.1) + (B13), (A) + (B4. 1) + (B13.1), (A) + (B4. 1) + (B13.2),
(A) + (B4.1) + (B13.3), (A) + (B4.1) + (B13.4), (A) + (B4.1) + (B13.5),
(A) + (B4.1) + (B13.6), (A) + (B4.1) + (B14.2), (A) + (B4.1) + (B14.3),
(A) + (B4.1) + (B15.2), (A) + (B4.1) + (B16), (A) + (B4. 1) + (B17.1),
(A) + (B4.1) + (B18.1), (A) + (B4.1) + (B19), (A) + (B4.1) + (B20.1),
(A) + (B4.1) + (B21.1), (A) + (B4.1) + (B22.1), (A) + (B4.1) + (B23.1),
(A) + (B4.1) + (B24.1); (A) + (B4.1) + (B25), (A) + (B4.1) + (B26.1),
(A) + (B4.1) + (B27.1), (A) + (B4.1) + (B28.1), (A) + (B4.1) + (B29),
(A) + (B4.1) + (B29.1), (A) + (B4.1) + (B29.2), (A) + (B4.1) + (B29.3),
(A) + (B4.1) + (B30.1), (A) + (B4.1) + (B31.1), (A) + (B4.1) + (B32.1),
(A) + (B4.1) + (B32.2), (A) + (B4.1) + (B33), (A) + (B4.1) + (B34),
(A) + (B4.1) + (B34.1), (A) + (B4.1) + (B34.2), (A) + (B4.1) + (B35),
(A) + (B4.1) + (B36), (A) + (B4.1) + (B36.1), (A) + (B4.1) + (B36.2),
(A) + (B4.1) + (B37), (A) + (B4.1) + (B37.1), (A) + (B4.1) + (B37.2),
(A) + (B4.1) + (B38), (A) + (B4.1) + (B38.1), (A) + (B4.1) + (B38.2),
(A) + (B4.1) + (B39), (A) + (B4.1) + (B39.1). (A) + (B4.1) + (B40),
(A) + (B4.1) + (B40.1), (A) + (B4.1) + (B41), (A) + (B4.1) + (B41.1),
(A) + (B4.1) + (B41.2), (A) + (B4.1) + (B42), (A) + (B4.1) + (B42.1),
(A) + (B4.1) + (B42.2), (A) + (B4.1) + (B42.3), (A) + (B4.1) + (B43),
(A) + (B4.1) + (B43.1),

(A) + (B5) + (B6), (A) + (B5) + (B7), (A) + (B5) + (B8.1), (A) + (B5) + (B9.1),
(A) + (B5) + (B9.2), (A) + (B5) + (B9.3), (A) + (B5) + (B10), (A) + (B5) + (B10.1),
(A) + (B5) + (B11), (A) + (B5) + (B11.1), (A) + (B5) + (B11.2), (A) + (B5) + (B11.3),
(A) + (B5) + (B12), (A) + (B5) + (B12.1), (A) + (B5) + (B12.2), (A) + (B5) + (B12.3),
(A) + (B5) + (B13), (A) + (B5) + (B13.1), (A) + (B5) + (B13.2), (A) + (B5) + (B13.3),
(A) + (B5) + (B13.4), (A) + (B5) + (B13.5), (A) + (B5) + (B13.6), (A) + (B5) + (B14.2),
(A) + (B5) + (B14.3), (A) + (B5) + (B15.2), (A) + (B5) + (B16), (A) + (B5) + (B17.1),
(A) + (B5) + (B18.1), (A) + (B5) + (B19), (A) + (B5) + (B20.1), (A) + (B5) + (B21.1),
(A) + (B5) + (B22.1), (A) + (B5) + (B23.1), (A) + (B5) + (B24.1); (A) + (B5) + (B25),
(A) + (B5) + (B26.1), (A) + (B5) + (B27.1), (A) + (B5) + (B28.1), (A) + (B5) + (B29),
(A) + (B5) + (B29.1), (A) + (B5) + (B29.2), (A) + (B5) + (B29.3), (A) + (B5) + (B30.1),
(A) + (B5) + (B31.1), (A) + (B5) + (B32.1), (A) + (B5) + (B32.2), (A) + (B5) + (B33),
(A) + (B5) + (B34), (A) + (B5) + (B34.1), (A) + (B5) + (B34.2), (A) + (B5) + (B35),
(A) + (B5) + (B36), (A) + (B5) + (B36.1), (A) + (B5) + (B36.2), (A) + (B5) + (B37),
(A) + (B5) + (B37.1), (A) + (B5) + (B37.2), (A) + (B5) + (B38), (A) + (B5) + (B38.1),
(A) + (B5) + (B38.2), (A) + (B5) + (B39), (A) + (B5) + (B39.1), (A) + (B5) + (B40),
(A) + (B5) + (B40.1), (A) + (B5) + (B41), (A) + (B5) + (B41.1), (A) + (B5) + (B41.2),
(A) + (B5) + (B42), (A) + (85) + (B42.1), (A) + (B5) + (B42.2), (A) + (B5) + (B42.3),
(A) + (B5) + (B43), (A) + (B5) + (B43.1),

(A) + (B6) + (B7), (A) + (B6) + (B8.1), (A) + (B6) + (B9.1), (A) + (B6) + (B9.2),
(A) + (B6) + (B9.3), (A) + (B6) + (B10), (A) + (B6) + (B10.1), (A) + (B6) + (B11),
(A) + (B6) + (B11.1), (A) + (B6) + (B11.2), (A) + (B6) + (B11.3), (A) + (B6) + (B12),
(A) + (B6) + (B12.1), (A) + (B6) + (B12.2), (A) + (B6) + (B12.3), (A) + (B6) + (B13),
(A) + (B6) + (B13.1), (A) + (B6) + (B13.2), (A) + (B6) + (B13.3), (A) + (B6) + (B13.4),
(A) + (B6) + (B13.5), (A) + (B6) + (B13.6), (A) + (B6) + (B14.2), (A) + (B6) + (B14.3),
(A) + (B6) + (B15.2), (A) + (B6) + (B16), (A) + (B6) + (B17.1), (A) + (B6) + (B18.1),
(A) + (B6) + (B19), (A) + (B6) + (B20.1), (A) + (B6) + (B21.1), (A) + (B6) + (B22.1),
(A) + (B6) + (B23.1), (A) + (B6) + (B24.1); (A) + (B6) + (B25), (A) + (B6) + (B26.1),
(A) + (B6) + (B27.1), (A) + (B6) + (B28.1), (A) + (B6) + (B29), (A) + (B6) + (B29.1),
(A) + (B6) + (B29.2), (A) + (B6) + (B29.3), (A) + (B6) + (B30.1), (A) + (B6) + (B31.1),
(A) + (B6) + (B32.1), (A) + (B6) + (B32.2), (A) + (B6) + (B33), (A) + (B6) + (B34),
(A) + (B6) + (B34.1), (A) + (B6) + (B34.2), (A) + (B6) + (B35), (A) + (B6) + (B36),
(A) + (B6) + (B36.1), (A) + (B6) + (B36.2), (A) + (B6) + (B37), (A) + (B6) + (B37.1),
(A) + (B6) + (B37.2), (A) + (B6) + (B38), (A) + (B6) + (B38.1), (A) + (B6) + (B38.2),
(A) + (B6) + (B39), (A) + (B6) + (B39.1), (A) + (B6) + (B40), (A) + (B6) + (B40.1),
(A) + (B6) + (B41), (A) + (B6) + (B41.1), (A) + (B6) + (B41.2), (A) + (B6) + (B42),
(A) + (B6) + (B42.1), (A) + (B6) + (B42.2), (A) + (B6) + (B42.3), (A) + (B6) + (B43),
(A) + (B6) + (B43.1),

(A) + (B7) + (B8.1), (A) + (B7) + (B9.1), (A) + (B7) + (B9.2), (A) + (B7) + (B9.3),
(A) + (B7) + (B10), (A) + (B7) + (B10.1), (A) + (B7) + (B11), (A) + (B7) + (B11.1),
(A) + (B7) + (B11.2), (A) + (B7) + (B11.3), (A) + (B7) + (B12), (A) + (B7) + (B12.1),
(A) + (B7) + (B12.2), (A) + (B7) + (B12.3), (A) + (B7) + (B13), (A) + (B7) + (B13.1),
(A) + (B7) + (B13.2), (A) + (B7) + (B13.3), (A) + (B7) + (B13.4), (A) + (B7) + (B13.5),
(A) + (B7) + (B13.6), (A) + (B7) + (B14.2), (A) + (B7) + (B14.3), (A) + (B7) + (B15.2),
(A) + (B7) + (B16), (A) + (B7) + (B17.1), (A) + (B7) + (B18.1), (A) + (B7) + (B19),
(A) + (B7) + (B20.1), (A) + (B7) + (B21.1), (A) + (B7) + (B22.1), (A) + (B7) + (B23.1),
(A) + (B7) + (B24.1); (A) + (B7) + (B25), (A) + (B7) + (B26.1), (A) + (B7) + (B27.1),
(A) + (B7) + (B28.1), (A) + (B7) + (B29), (A) + (B7) + (B29.1), (A) + (B7) + (B29.2),
(A) + (B7) + (B29.3), (A) + (B7) + (B30.1), (A) + (B7) + (B31.1), (A) + (B7) + (B32.1),
(A) + (B7) + (B32.2), (A) + (B7) + (B33), (A) + (B7) + (B34), (A) + (B7) + (B34.1),
(A) + (B7) + (B34.2), (A) + (B7) + (B35), (A) + (B7) + (B36), (A) + (B7) + (B36.1),
(A) + (B7) + (B36.2), (A) + (B7) + (B37), (A) + (B7) + (B37.1), (A) + (B7) + (B37.2),
(A) + (B7) + (B38), (A) + (B7) + (B38.1), (A) + (B7) + (B38.2), (A) + (B7) + (B39),
(A) + (B7) + (B39.1), (A) + (B7) + (B40), (A) + (B7) + (B40.1), (A) + (B7) + (B41),
(A) + (B7) + (B41.1), (A) + (B7) + (B41.2), (A) + (B7) + (B42), (A) + (B7) + (B42.1),
(A) + (B7) + (B42.2), (A) + (B7) + (B42.3), (A) + (B7) + (B43), (A) + (B7) + (B43.1),

(A) + (B8.1) + (B9.1), (A) + (B8.1) + (B9.2), (A) + (B8.1) + (B9.3),
(A) + (B8.1) + (B10), (A) + (B8.1) + (B10.1), (A) + (B8.1) + (B11),
(A) + (B8.1) + (B11.1), (A) + (B8.1) + (B11.2), (A) + (B8.1) + (B11.3),
(A) + (B8.1) + (B12), (A) + (B8.1) + (B12.1), (A) + (B8.1) + (B12.2),
(A) + (B8.1) + (B12.3), (A) + (B8.1) + (B13), (A) + (B8.1) + (B13.1),
(A) + (B8.1) + (B13.2), (A) + (B8.1) + (B13.3), (A) + (B8.1) + (B13.4),
(A) + (B8.1) + (B13.5), (A) + (B8.1) + (B13.6), (A) + (B8.1) + (B14.2),
(A) + (B8.1) + (B14.3), (A) + (B8.1) + (B15.2), (A) + (B8.1) + (B16),
(A) + (B8.1) + (B17.1), (A) + (B8.1) + (B18.1), (A) + (B8.1) + (B19),
(A) + (B8.1) + (B20.1), (A) + (B8.1) + (B21.1), (A) + (B8.1) + (B22.1),
(A) + (B8.1) + (B23.1), (A) + (B8.1) + (B24.1); (A) + (B8.1) + (B25),
(A) + (B8.1) + (B26.1), (A) + (B8.1) + (B27.1), (A) + (B8.1) + (B28.1),
(A) + (B8.1) + (B29), (A) + (B8.1) + (B29.1), (A) + (B8.1) + (B29.2),
(A) + (B8.1) + (B29.3), (A) + (B8.1) + (B30.1), (A) + (B8.1) + (B31.1),
(A) + (B8.1) + (B32.1), (A) + (B8.1) + (B32.2), (A) + (B8.1) + (B33),
(A) + (B8.1) + (B34), (A) + (B8.1) + (B34.1), (A) + (B8.1) + (B34.2),
(A) + (B8.1) + (B35), (A) + (B8.1) + (B36), (A) + (B8.1) + (B36.1),
(A) + (B8.1) + (B36.2), (A) + (B8.1) + (B37), (A) + (B8.1) + (B37.1),
(A) + (B8.1) + (B37.2), (A) + (B8.1) + (B38), (A) + (B8.1) + (B38.1),
(A) + (B8.1) + (B38.2), (A) + (B8.1) + (B39), (A) + (B8.1) + (B39.1),
(A) + (B8.1) + (B40), (A) + (B8.1) + (B40.1), (A) + (B8.1) + (B41),
(A) + (B8.1) + (B41.1), (A) + (B8.1) + (B41.2), (A) + (B8.1) + (B42),
(A) + (B8.1) + (B42.1), (A) + (B8.1) + (B42.2), (A) + (B8.1) + (B42.3),
(A) + (B8.1) + (B43), (A) + (B8.1) + (B43.1),

(A) + (B9.1) + (B10), (A) + (B9.1) + (B10.1), (A) + (B9.1) + (B11),
(A) + (B9.1) + (B11.1), (A) + (B9.1) + (B11.2), (A) + (B9.1) + (B11.3),
(A) + (B9.1) + (B12), (A) + (B9.1) + (B12.1), (A) + (B9.1) + (B12.2),
(A) + (B9.1) + (B12.3), (A) + (B9.1) + (B13), (A) + (B9.1) + (B13.1),
(A) + (B9.1) + (B13.2), (A) + (B9.1) + (B13.3), (A) + (B9.1) + (B13.4),
(A) + (B9.1) + (B13.5), (A) + (B9.1) + (B13.6), (A) + (B9.1) + (B14.2),
(A) + (B9.1) + (B14.3), (A) + (B9.1) + (B15.2), (A) + (B9.1) + (B16),
(A) + (B9.1) + (B17.1), (A) + (B9.1) + (B18.1), (A) + (B9.1) + (B19),
(A) + (B9.1) + (B20.1), (A) + (B9.1) + (B21.1), (A) + (B9.1) + (B22.1),
(A) + (B9.1) + (B23.1), (A) + (B9.1) + (B24.1); (A) + (B9.1) + (B25),
(A) + (B9.1) + (B26.1), (A) + (B9.1) + (B27.1), (A) + (B9.1) + (B28.1),
(A) + (B9.1) + (B29), (A) + (B9.1) + (B29.1), (A) + (B9.1) + (B29.2),
(A) + (B9.1) + (B29.3), (A) + (B9.1) + (B30.1), (A) + (B9.1) + (B31.1),
(A) + (B9.1) + (B32.1), (A) + (B9.1) + (B32.2), (A) + (B9.1) + (B33),
(A) + (B9.1) + (B34), (A) + (B9.1) + (B34.1), (A) + (B9.1) + (B34.2),
(A) + (B9.1) + (B35), (A) + (B9.1) + (B36), (A) + (B9.1) + (B36.1),
(A) + (B9.1) + (B36.2), (A) + (B9.1) + (B37), (A) + (B9.1) + (B37.1),
(A) + (B9.1) + (B37.2), (A) + (B9.1) + (B38), (A) + (B9.1) + (B38.1),
(A) + (B9.1) + (B38.2), (A) + (B9.1) + (B39), (A) + (B9.1) + (B39.1),
(A) + (B9.1) + (B40), (A) + (B9.1) + (B40.1), (A) + (B9.1) + (B41),
(A) + (B9.1) + (B41.1), (A) + (B9.1) + (B41.2), (A) + (B9.1) + (B42),
(A) + (B9.1) + (B42.1), (A) + (B9.1) + (B42.2), (A) + (B9.1) + (B42.3),
(A) + (B9.1) + (B43), (A) + (B9.1) + (B43.1), (A) + (B9.2) + (B10),
(A) + (B9.2) + (B10.1), (A) + (B9.2) + (B11), (A) + (B9.2) + (B11.1),
(A) + (B9.2) + (B11.2), (A) + (B9.2) + (B11.3), (A) + (B9.2) + (B12),
(A) + (B9.2) + (B12.1), (A) + (B9.2) + (B12.2), (A) + (B9.2) + (B12.3),
(A) + (B9.2) + (B13), (A) + (B9.2) + (B13.1), (A) + (B9.2) + (B13.2),
(A) + (B9.2) + (B13.3), (A) + (B9.2) + (B13.4), (A) + (B9.2) + (B13.5),
(A) + (B9.2) + (B13.6), (A) + (B9.2) + (B14.2), (A) + (B9.2) + (B14.3),
(A) + (B9.2) + (B15.2), (A) + (B9.2) + (B16), (A) + (B9.2) + (B17.1),
(A) + (B9.2) + (B18.1), (A) + (B9.2) + (B19), (A) + (B9.2) + (B20.1),
(A) + (B9.2) + (B21.1), (A) + (B9.2) + (B22.1), (A) + (B9.2) + (B23.1),
(A) + (B9.2) + (B24.1); (A) + (B9.2) + (B25), (A) + (B9.2) + (B26.1),
(A) + (B9.2) + (B27.1), (A) + (B9.2) + (B28.1), (A) + (B9.2) + (B29),
(A) + (B9.2) + (B29.1), (A) + (B9.2) + (B29.2), (A) + (B9.2) + (B29.3),
(A) + (B9.2) + (B30.1), (A) + (B9.2) + (B31.1), (A) + (B9.2) + (B32.1),
(A) + (B9.2) + (B32.2), (A) + (B9.2) + (B33), (A) + (B9.2) + (B34),
(A) + (B9.2) + (B34.1), (A) + (B9.2) + (B34.2), (A) + (B9.2) + (B35),
(A) + (B9.2) + (B36), (A) + (B9.2) + (B36.1), (A) + (B9.2) + (B36.2),
(A) + (B9.2) + (B37), (A) + (B9.2) + (B37.1), (A) + (B9.2) + (B37.2),
(A) + (B9.2) + (B38), (A) + (B9.2) + (B38.1), (A) + (B9.2) + (B38.2),
(A) + (B9.2) + (B39), (A) + (B9.2) + (B39.1), (A) + (B9.2) + (B40),
(A) + (B9.2) + (B40.1), (A) + (B9.2) + (B41), (A) + (B9.2) + (B41.1),
(A) + (B9.2) + (B41.2), (A) + (B9.2) + (B42), (A) + (B9.2) + (B42.1),
(A) + (B9.2) + (B42.2), (A) + (B9.2) + (B42.3), (A) + (B9.2) + (B43),
(A) + (B9.2) + (B43.1),

(A) + (B9.3) + (B10), (A) + (B9.3) + (B10.1), (A) + (B9.3) + (B11),
(A) + (B9.3) + (B11.1), (A) + (B9.3) + (B11.2), (A) + (B9.3) + (B11.3),
(A) + (B9.3) + (B12), (A) + (B9.3) + (B12.1), (A) + (B9.3) + (B12.2),
(A) + (B9.3) + (B12.3), (A) + (B9.3) + (B13), (A) + (B9.3) + (B13.1),
(A) + (B9.3) + (B13.2), (A) + (B9.3) + (B13.3), (A) + (B9.3) + (B13.4),
(A) + (B9.3) + (B13.5), (A) + (B9.3) + (B13.6), (A) + (B9.3) + (B14.2),
(A) + (B9.3) + (B14.3), (A) + (B9.3) + (B15.2), (A) + (B9.3) + (B16),
(A) + (B9.3) + (B17.1), (A) + (B9.3) + (B18.1), (A) + (B9.3) + (B19),
(A) + (B9.3) + (B20.1), (A) + (B9.3) + (B21.1), (A) + (B9.3) + (B22.1),
(A) + (B9.3) + (B23.1), (A) + (B9.3) + (B24.1); (A) + (B9.3) + (B25),
(A) + (B9.3) + (B26.1), (A) + (B9.3) + (B27.1), (A) + (B9.3) + (B28.1),
(A) + (B9.3) + (B29), (A) + (B9.3) + (B29.1), (A) + (B9.3) + (B29.2),
(A) + (B9.3) + (B29.3), (A) + (B9.3) + (B30.1), (A) + (B9.3) + (B31.1),
(A) + (B9.3) + (B32.1), (A) + (B9.3) + (B32.2), (A) + (B9.3) + (B33),
(A) + (B9.3) + (B34), (A) + (B9.3) + (B34.1), (A) + (B9.3) + (B34.2),
(A) + (B9.3) + (B35), (A) + (B9.3) + (B36), (A) + (B9.3) + (B36.1),
(A) + (B9.3) + (B36.2), (A) + (B9.3) + (B37), (A) + (B9.3) + (B37.1),
(A) + (B9.3) + (B37.2), (A) + (B9.3) + (B38), (A) + (B9.3) + (B38.1),
(A) + (B9.3) + (B38.2), (A) + (B9.3) + (B39), (A) + (B9.3) + (B39.1),
(A) + (B9.3) + (B40), (A) + (B9.3) + (B40.1), (A) + (B9.3) + (B41),
(A) + (B9.3) + (B41.1), (A) + (B9.3) + (B41.2), (A) + (B9.3) + (B42),
(A) + (B9.3) + (B42.1), (A) + (B9.3) + (B42.2), (A) + (B9.3) + (B42.3),
(A) + (B9.3) + (B43), (A) + (B9.3) + (B43.1), (A) + (B10) + (B11),

(A) + (B10) + (B11.1), (A) + (B10) + (B11.2), (A) + (B10) + (B11.3),
(A) + (B10) + (B12), (A) + (B10) + (B12.1), (A) + (B10) + (B12.2),
(A) + (B10) + (B12.3), (A) + (B10) + (B13), (A) + (B10) + (B13.1),
(A) + (B10) + (B13.2), (A) + (B10) + (B13.3), (A) + (B10) + (B13.4),
(A) + (B10) + (B13.5), (A) + (B10) + (B13.6), (A) + (B10) + (B14.2),
(A) + (B10) + (B14.3), (A) + (B10) + (B15.2), (A) + (B10) + (B16),
(A) + (B10) + (B17.1), (A) + (B10) + (B18.1), (A) + (B10) + (B19),
(A) + (B10) + (B20.1), (A) + (B10) + (B21.1), (A) + (B10) + (B22.1),
(A) + (B10) + (B23.1), (A) + (B10) + (B24.1); (A) + (B10) + (B25),
(A) + (B10) + (B26.1), (A) + (B10) + (B27.1), (A) + (B10) + (B28.1),
(A) + (B10) + (B29), (A) + (B10) + (B29.1), (A) + (B10) + (B29.2), (A) + (B10) + (B29.3), (A) + (B10) + (B30.1), (A) + (B10) + (B31.1),
(A) + (B10) + (B32.1), (A) + (B10) + (B32.2), (A) + (B10) + (B33),
(A) + (B10) + (B34), (A) + (B10) + (B34.1), (A) + (B10) + (B34.2),
(A) + (B10) + (B35), (A) + (B10) + (B36), (A) + (B10) + (B36.1),
(A) + (B10) + (B36.2), (A) + (B10) + (B37), (A) + (B10) + (B37.1),
(A) + (B10) + (B37.2), (A) + (B10) + (B38), (A) + (B10) + (B38.1),
(A) + (B10) + (B38.2), (A) + (B10) + (B39), (A) + (B10) + (B39.1),
(A) + (B10) + (B40), (A) + (B10) + (B40.1), (A) + (B10) + (B41),
(A) + (B10) + (B41.1), (A) + (B10) + (B41.2), (A) + (B10) + (B42),
(A) + (B10) + (B42.1), (A) + (B10) + (B42.2), (A) + (B10) + (B42.3),
(A) + (B10) + (B43), (A) + (B10) + (B43.1),

(A) + (B11) + (B12), (A) + (B11) + (B13), (A) + (B11) + (B13.6),
(A) + (B11) + (B14.2), (A) + (B11) + (B14.3), (A) + (B11) + (B15.2),
(A) + (B11) + (B16), (A) + (B11) + (B17.1), (A) + (B11) + (B18.1),
(A) + (B11) + (B19), (A) + (B11) + (B20.1), (A) + (B11) + (B21.1),
(A) + (B11) + (B22.1), (A) + (B11) + (B23.1), (A) + (B11) + (B24.1);
(A) + (B11) + (B25), (A) + (B11) + (B26.1), (A) + (B11) + (B27.1),
(A) + (B11) + (B28.1), (A) + (B11) + (B29), (A) + (B11) + (B29.1),
(A) + (B11) + (B29.2), (A) + (B11) + (B29.3), (A) + (B11) + (B30.1),
(A) + (B11) + (B31.1), (A) + (B11) + (B32.1), (A) + (B11) + (B32.2),
(A) + (B11) + (B33), (A) + (B11) + (B34), (A) + (B11) + (B34.1),
(A) + (B11) + (B34.2), (A) + (B11) + (B35), (A) + (B11) + (B36),
(A) + (B11) + (B36.1), (A) + (B11) + (B36.2), (A) + (B11) + (B37),
(A) + (B11) + (B37.1), (A) + (B11) + (B37.2), (A) + (B11) + (B38),
(A) + (B11) + (B38.1), (A) + (B11) + (B38.2), (A) + (B11) + (B39),
(A) + (B11) + (B39.1), (A) + (B11) + (B40), (A) + (B11) + (B40.1),
(A) + (B11) + (B41), (A) + (B11) + (B41.1), (A) + (B11) + (B41.2),
(A) + (B11) + (B42), (A) + (B11) + (B42.1), (A) + (B11) + (B42.2),
(A) + (B11) + (B42.3), (A) + (B11) + (B43), (A) + (B11) + (B43.1),
(A) + (B11.2) + (B12), (A) + (B11.2) + (B13), (A) + (B11.2) + (B13.6),
(A) + (B11.2) + (B14.2), (A) + (B11.2) + (B14.3), (A) + (B11.2) + (B15.2),
(A) + (B11.2) + (B16), (A) + (B11.2) + (B17.1), (A) + (B11.2) + (B18.1),
(A) + (B11.2) + (B19), (A) + (B11.2) + (B20.1), (A) + (B11.2) + (B21.1),
(A) + (B11.2) + (B22.1), (A) + (B11.2) + (B23.1), (A) + (B11.2) + (B24.1);
(A) + (B11.2) + (B25), (A) + (B11.2) + (B26.1), (A) + (B11.2) + (B27.1),
(A) + (B11.2) + (B28.1), (A) + (B11.2) + (B29), (A) + (B11.2) + (B29.1),
(A) + (B11.2) + (B29.2), (A) + (B11.2) + (B29.3), (A) + (B11.2) + (B30.1),
(A) + (B11.2) + (B31.1), (A) + (B11.2) + (B32.1), (A) + (B11.2) + (B32.2),
(A) + (B11.2) + (B33), (A) + (B11.2) + (B34), (A) + (B11.2) + (B34.1),
(A) + (B11.2) + (B34.2), (A) + (B11.2) + (B35), (A) + (B11.2) + (B36),
(A) + (B11.2) + (B36.1), (A) + (B11.2) + (B36.2), (A) + (B11.2) + (B37),
(A) + (B11.2) + (B37.1), (A) + (B11.2) + (B37.2), (A) + (B11.2) + (B38),
(A) + (B11.2) + (B38.1), (A) + (B11.2) + (B38.2), (A) + (B11.2) + (B39),
(A) + (B11.2) + (B39.1), (A) + (B11.2) + (B40), (A) + (B11.2) + (B40.1),
(A) + (B11.2) + (B41), (A) + (B11.2) + (B41.1), (A) + (B11.2) + (B41.2),
(A) + (B11.2) + (B42), (A) + (B11.2) + (B42.1), (A) + (B11.2) + (B42.2),
(A) + (B11.2) + (B42.3), (A) + (B11.2) + (B43), (A) + (B11.2) + (B43.1),

(A) + (B12) + (B13), (A) + (B12) + (B13.6), (A) + (B12) + (B14.2),
(A) + (B12) + (B14.3), (A) + (B12) + (B15.2), (A) + (B12) + (B16),
(A) + (B12) + (B17.1), (A) + (B12) + (B18.1), (A) + (B12) + (B19),
(A) + (B12) + (B20.1), (A) + (B12) + (B21.1), (A) + (B12) + (B22.1),
(A) + (B12) + (B23.1), (A) + (B12) + (B24.1); (A) + (B12) + (B25),
(A) + (B12) + (B26.1), (A) + (B12) + (B27.1), (A) + (B12) + (B28.1),
(A) + (B12) + (B29), (A) + (B12) + (B29.1), (A) + (B12) + (B29.2),
(A) + (B12) + (B29.3), (A) + (B12) + (B30.1), (A) + (B12) + (B31.1),
(A) + (B12) + (B32.1), (A) + (B12) + (B32.2), (A) + (B12) + (B33),
(A) + (B12) + (B34), (A) + (B12) + (B34.1), (A) + (B12) + (B34.2),
(A) + (B12) + (B35), (A) + (B12) + (B36), (A) + (B12) + (B36.1),
(A) + (B12) + (B36.2), (A) + (B12) + (B37), (A) + (B12) + (B37.1),
(A) + (B12) + (B37.2), (A) + (B12) + (B38), (A) + (B12) + (B38.1),
(A) + (B12) + (B38.2), (A) + (B12) + (B39), (A) + (B12) + (B39.1),
(A) + (B12) + (B40), (A) + (B12) + (B40.1), (A) + (B12) + (B41),
(A) + (B12) + (B41.1), (A) + (B12) + (B41.2), (A) + (B12) + (B42),
(A) + (B12) + (B42.1), (A) + (B12) + (B42.2), (A) + (B12) + (B42.3),
(A) + (B12) + (B43), (A) + (B12) + (B43.1),

(A) + (B12.2) + (B13), (A) + (B12.2) + (B13.6), (A) + (B12.2) + (B14.2),
(A) + (B12.2) + (B14.3), (A) + (B12.2) + (B15.2), (A) + (B12.2) + (B16),
(A) + (B12.2) + (B17.1), (A) + (B12.2) + (B18.1), (A) + (B12.2) + (B19),
(A) + (B12.2) + (B20.1), (A) + (B12.2) + (B21.1), (A) + (B12.2) + (B22.1),
(A) + (B12.2) + (B23.1), (A) + (B12.2) + (B24.1); (A) + (B12.2) + (B25),
(A) + (B12.2) + (B26.1), (A) + (B12.2) + (B27.1), (A) + (B12.2) + (B28.1),
(A) + (B12.2) + (B29), (A) + (B12.2) + (B29.1), (A) + (B12.2) + (B29.2),
(A) + (B12.2) + (B29.3), (A) + (B12.2) + (B30.1), (A) + (B12.2) + (B31.1),
(A) + (B12.2) + (B32.1), (A) + (B12.2) + (B32.2), (A) + (B12.2) + (B33),
(A) + (B12.2) + (B34), (A) + (B12.2) + (B34.1), (A) + (B12.2) + (B34.2),
(A) + (B12.2) + (B35), (A) + (B12.2) + (B36), (A) + (B12.2) + (B36.1),
(A) + (B12.2) + (B36.2), (A) + (B12.2) + (B37), (A) + (B12.2) + (B37.1),
(A) + (B12.2) + (B37.2), (A) + (B12.2) + (B38), (A) + (B12.2) + (B38.1),
(A) + (B12.2) + (B38.2), (A) + (B12.2) + (B39), (A) + (B12.2) + (B39.1),
(A) + (B12.2) + (B40), (A) + (B12.2) + (B40.1), (A) + (B12.2) + (B41),
(A) + (B12.2) + (B41.1), (A) + (B12.2) + (B41.2), (A) + (B12.2) + (B42),
(A) + (B12.2) + (B42.1), (A) + (B12.2) + (B42.2), (A) + (B12.2) + (B42.3),
(A) + (B12.2) + (B43), (A) + (B12.2) + (B43.1),

(A) + (B12.3) + (B13), (A) + (B12.3) + (B13.6), (A) + (B12.3) + (B14.2),
(A) + (B12.3) + (B14.3), (A) + (B12.3) + (B15.2), (A) + (B12.3) + (B16),
(A) + (B12.3) + (B17.1), (A) + (B12.3) + (B18.1), (A) + (B12.3) + (B19),
(A) + (B12.3) + (B20.1), (A) + (B12.3) + (B21.1), (A) + (B12.3) + (B22.1),
(A) + (B12.3) + (B23.1), (A) + (B12.3) + (B24.1); (A) + (B12.3) + (B25),
(A) + (B12.3) + (B26.1), (A) + (B12.3) + (B27.1), (A) + (B12.3) + (B28.1),
(A) + (B12.3) + (B29), (A) + (B12.3) + (B29.1), (A) + (B12.3) + (B29.2),
(A) + (B12.3) + (B29.3), (A) + (B12.3) + (B30.1), (A) + (B12.3) + (B31.1),
(A) + (B12.3) + (B32.1), (A) + (B12.3) + (B32.2), (A) + (B12.3) + (B33),
(A) + (B12.3) + (B34), (A) + (B12.3) + (B34.1), (A) + (B12.3) + (B34.2),
(A) + (B12.3) + (B35), (A) + (B12.3) + (B36), (A) + (B12.3) + (B36.1),
(A) + (B12.3) + (B36.2), (A) + (B12.3) + (B37), (A) + (B12.3) + (B37.1),
(A) + (B12.3) + (B37.2), (A) + (B12.3) + (B38), (A) + (B12.3) + (B38.1),
(A) + (B12.3) + (B38.2), (A) + (B12.3) + (B39), (A) + (B12.3) + (B39.1),
(A) + (B12.3) + (B40), (A) + (B12.3) + (B40.1), (A) + (B12.3) + (B41),
(A) + (B12.3) + (B41.1), (A) + (B12.3) + (B41.2), (A) + (B12.3) + (B42),
(A) + (B12.3) + (B42.1), (A) + (B12.3) + (B42.2), (A) + (B12.3) + (B42.3),
(A) + (B12.3) + (B43), (A) + (B12.3) + (B43.1),

(A) + (B13) + (B14.2), (A) + (B13) + (B14.3), (A) + (B13) + (B15.2),
(A) + (B13) + (B16), (A) + (B13) + (B17.1), (A) + (B13) + (B18.1),
(A) + (B13) + (B19), (A) + (B13) + (B20.1), (A) + (B13) + (B21.1),
(A) + (B13) + (B22.1), (A) + (B13) + (B23.1), (A) + (B13) + (B24.1),
(A) + (B13) + (B25), (A) + (B13) + (B26.1), (A) + (B13) + (B27.1),
(A) + (B13) + (B28.1), (A) + (B13) + (B29), (A) + (B13) + (B29.1),
(A) + (B13) + (B29.2), (A) + (B13) + (B29.3), (A) + (B13) + (B30.1),
(A) + (B13) + (B31.1), (A) + (B13) + (B32.1), (A) + (B13) + (B32.2),
(A) + (B13) + (B33), (A) + (B13) + (B34), (A) + (B13) + (B34.1),
(A) + (B13) + (B34.2), (A) + (B13) + (B35), (A) + (B13) + (B36),
(A) + (B13) + (B36.1). (A) + (B13) + (B36.2), (A) + (B13) + (B37),
(A) + (B13) + (B37.1), (A) + (B13) + (B37.2), (A) + (B13) + (B38),
(A) + (B13) + (B38.1), (A) + (B13) + (B38.2), (A) + (B13) + (B39),
(A) + (B13) + (B39.1), (A) + (B13) + (B40), (A) + (B13) + (B40.1),
(A) + (B13) + (B41), (A) + (B13) + (B41.1), (A) + (B13) + (B41.2),
(A) + (B13) + (B42), (A) + (B13) + (B42.1), (A) + (B13) + (B42.2),
(A) + (B13) + (B42.3), (A) + (B13) + (B43), (A) + (B13) + (B43.1),
(A) + (B13.6) + (B14.2), (A) + (B13.6) + (B14.3), (A) + (B13.6) + (B15.2),
(A) + (B13.6) + (B16), (A) + (B13.6) + (B17.1), (A) + (B13.6) + (B18.1),
(A) + (B13.6) + (B19), (A) + (B13.6) + (B20.1), (A) + (B13.6) + (B21.1).
(A) + (B13.6) + (B22.1), (A) + (B13.6) + (B23.1), (A) + (B13.6) + (B24.1);
(A) + (B13.6) + (B25), (A) + (B13.6) + (B26.1), (A) + (B13.6) + (B27.1),
(A) + (B13.6) + (B28.1), (A) + (B13.6) + (B29), (A) + (B13.6) + (B29.1),
(A) + (B13.6) + (B29.2), (A) + (B13.6) + (B29.3), (A) + (B13.6) + (B30.1),
(A) + (B13.6) + (B31.1), (A) + (B13.6) + (B32.1), (A) + (B13.6) + (B32.2),
(A) + (B13.6) + (B33), (A) + (B13.6) + (B34), (A) + (B13.6) + (B34.1),
(A) + (B13.6) + (B34.2), (A) + (B13.6) + (B35), (A) + (B13.6) + (B36),
(A) + (B13.6) + (B36.1), (A) + (B13.6) + (B36.2), (A) + (B13.6) + (B37),
(A) + (B13.6) + (B37.1), (A) + (B13.6) + (B37.2), (A) + (B13.6) + (B38),
(A) + (B13.6) + (B38.1), (A) + (B13.6) + (B38.2), (A) + (B13.6) + (B39),
(A) + (B13.6) + (B39.1), (A) + (B13.6) + (B40), (A) + (B13.6) + (B40.1),
(A) + (B13.6) + (B41), (A) + (B13.6) + (B41.1), (A) + (B13.6) + (B41.2),
(A) + (B13.6) + (B42), (A) + (B13.6) + (B42.1), (A) + (B13.6) + (B42.2),
(A) + (B13.6) + (B42.3), (A) + (B13.6) + (B43), (A) + (B13.6) + (B43.1),

(A) + (B14.3) + (B15.2), (A) + (B14.3) + (B16), (A) + (B14.3) + (B17.1),
(A) + (B14.3) + (B18.1), (A) + (B14.3) + (B19), (A) + (B14.3) + (B20.1),
(A) + (B14.3) + (B21.1), (A) + (B14.3) + (B22.1), (A) + (B14.3) + (B23.1),
(A) + (B14.3) + (B24.1); (A) + (B14.3) + (B25), (A) + (B14.3) + (B26.1),
(A) + (B14.3) + (B27.1), (A) + (B14.3) + (B28.1), (A) + (B14.3) + (B29),
(A) + (B14.3) + (B29.1), (A) + (B14.3) + (B29.2), (A) + (B14.3) + (B29.3),
(A) + (B14.3) + (B30.1), (A) + (B14.3) + (B31.1), (A) + (B14.3) + (B32.1),
(A) + (B14.3) + (B32.2), (A) + (B14.3) + (B33), (A) + (B14.3) + (B34),
(A) + (B14.3) + (B34.1), (A) + (B14.3) + (B34.2), (A) + (B14.3) + (B35),
(A) + (B14.3) + (B36), (A) + (B14.3) + (B36.1), (A) + (B14.3) + (B36.2),
(A) + (B14.3) + (B37), (A) + (B14.3) + (B37.1), (A) + (B14.3) + (B37.2),
(A) + (B14.3) + (B38), (A) + (B14.3) + (B38.1), (A) + (B14.3) + (B38.2),
(A) + (B14.3) + (B39), (A) + (B14.3) + (B39.1), (A) + (B14.3) + (B40),
(A) + (B14.3) + (B40.1), (A) + (B14.3) + (B41), (A) + (B14.3) + (B41.1),
(A) + (B14.3) + (B41.2), (A) + (B14.3) + (B42), (A) + (B14.3) + (B42.1),
(A) + (B14.3) + (B42.2), (A) + (B14.3) + (B42.3), (A) + (B14.3) + (B43),
(A) + (B14.3) + (B43. 1),

(A) + (B15.2) + (B16), (A) + (B15.2) + (B17.1), (A) + (B15.2) + (B18.1),
(A) + (B15.2) + (B19), (A) + (B15.2) + (B20.1), (A) + (B15.2) + (B21.1),
(A) + (B15.2) + (B22.1), (A) + (B15.2) + (B23.1), (A) + (B15.2) + (B24.1);
(A) + (B15.2) + (B25), (A) + (B15.2) + (B26.1), (A) + (B15.2) + (B27.1),
(A) + (B15.2) + (B28.1), (A) + (B15.2) + (B29), (A) + (B15.2) + (B29.1),
(A) + (B15.2) + (B29.2), (A) + (B15.2) + (B29.3), (A) + (B15.2) + (B30.1),
(A) + (B15.2) + (B31.1), (A) + (B15.2) + (B32.1), (A) + (B15.2) + (B32.2),
(A) + (B15.2) + (B33), (A) + (B15.2) + (B34), (A) + (B15.2) + (B34.1),
(A) + (B15.2) + (B34.2), (A) + (B15.2) + (B35), (A) + (B15.2) + (B36),
(A) + (B15.2) + (B36.1), (A) + (B15.2) + (B36.2), (A) + (B15.2) + (B37),
(A) + (B15.2) + (B37.1), (A) + (B15.2) + (B37.2), (A) + (B15.2) + (B38),
(A) + (B15.2) + (B38.1), (A) + (B15.2) + (B38.2), (A) + (B15.2) + (B39),
(A) + (B15.2) + (B39.1), (A) + (B15.2) + (B40), (A) + (B15.2) + (B40.1),
(A) + (B15.2) + (B41), (A) + (B15.2) + (B41.1), (A) + (B15.2) + (B41.2),
(A) + (B15.2) + (B42), (A) + (B15.2) + (B42.1), (A) + (B15.2) + (B42.2),
(A) + (B15.2) + (B42.3), (A) + (B15.2) + (B43), (A) + (B15.2) + (B43.1),

(A) + (B16) + (B17.1), (A) + (B16) + (B18.1), (A) + (B16) + (B19),
(A) + (B16) + (B20.1), (A) + (B16) + (B21.1), (A) + (B16) + (B22.1),
(A) + (B16) + (B23.1), (A) + (B16) + (B24.1); (A) + (B16) + (B25),
(A) + (B16) + (B26.1), (A) + (B16) + (B27.1), (A) + (B16) + (B28.1),
(A) + (B16) + (B29), (A) + (B16) + (B29.1), (A) + (B16) + (B29.2),
(A) + (B16) + (B29.3), (A) + (B16) + (B30.1), (A) + (B16) + (B31.1),
(A) + (B16) + (B32.1), (A) + (B16) + (B32.2), (A) + (B16) + (B33),
(A) + (B16) + (B34), (A) + (B16) + (B34.1), (A) + (B16) + (B34.2),
(A) + (B16) + (B35), (A) + (B16) + (B36), (A) + (B16) + (B36.1),
(A) + (B16) + (B36.2), (A) + (B16) + (B37), (A) + (B16) + (B37.1),
(A) + (B16) + (B37.2), (A) + (B16) + (B38), (A) + (B16) + (B38.1),
(A) + (B16) + (B38.2), (A) + (B16) + (B39), (A) + (B16) + (B39.1),
(A) + (B16) + (B40), (A) + (B16) + (B40.1), (A) + (B16) + (B41),
(A) + (B16) + (B41.1), (A) + (B16) + (B41.2), (A) + (B16) + (B42),
(A) + (B16) + (B42.1), (A) + (B16) + (B42.2), (A) + (B16) + (B42.3),
(A) + (B16) + (B43), (A) + (B16) + (B43.1),

(A) + (B17.1) + (B18.1), (A) + (B17.1) + (B19), (A) + (B17.1) + (B20.1),
(A) + (B17.1) + (B21.1), (A) + (B17.1) + (B22.1), (A) + (B17.1) + (B23.1),
(A) + (B17.1) + (B24.1); (A) + (B17.1) + (B25), (A) + (B17.1) + (B26.1),
(A) + (B17.1) + (B27.1), (A) + (B17.1) + (B28.1), (A) + (B17.1) + (B29),
(A) + (B17.1) + (B29.1), (A) + (B17.1) + (B29.2), (A) + (B17.1) + (B29.3),
(A) + (B17.1) + (B30.1), (A) + (B17.1) + (B31.1), (A) + (B17.1) + (B32.1),
(A) + (B17.1) + (B32.2), (A) + (B17.1) + (B33), (A) + (B17.1) + (B34),
(A) + (B17.1) + (B34.1), (A) + (B17.1) + (B34.2), (A) + (B17.1) + (B35),
(A) + (B17.1) + (B36), (A) + (B17.1) + (B36.1), (A) + (B17.1) + (B36.2),
(A) + (B17.1) + (B37), (A) + (B17.1) + (B37.1), (A) + (B17.1) + (B37.2),
(A) + (B17.1) + (B38), (A) + (B17.1) + (B38.1), (A) + (B17.1) + (B38.2),
(A) + (B17.1) + (B39), (A) + (B17.1) + (B39.1), (A) + (B17.1) + (B40),
(A) + (B17.1) + (B40.1), (A) + (B17.1) + (B41), (A) + (B17.1) + (B41.1),
(A) + (B17.1) + (B41.2), (A) + (B17.1) + (B42), (A) + (B17.1) + (B42.1),
(A) + (B17.1) + (B42.2), (A) + (B17.1) + (B42.3), (A) + (B17.1) + (B43),
(A) + (B17.1) + (B43.1),
(A) + (B18.1) + (B19), (A) + (B18.1) + (B20.1), (A) + (B18.1) + (B21.1),
(A) + (B18.1) + (B22.1), (A) + (B18.1) + (B23.1), (A) + (B18.1) + (B24.1);
(A) + (B18.1) + (B25), (A) + (B18.1) + (B26.1), (A) + (B18.1) + (B27.1),
(A) + (B18.1) + (B28.1), (A) + (B18.1) + (B29), (A) + (B18.1) + (B29.1),
(A) + (B18.1) + (B29.2), (A) + (B18.1) + (B29.3), (A) + (B18.1) + (B30.1),
(A) + (B18.1) + (B31.1), (A) + (B18.1) + (B32.1), (A) + (B18.1) + (B32.2),
(A) + (B18.1) + (B33), (A) + (B18.1) + (B34), (A) + (B18.1) + (B34.1),
(A) + (B18.1) + (B34.2), (A) + (B18.1) + (B35), (A) + (B18.1) + (B36),
(A) + (B18.1) + (B36.1), (A) + (B18.1) + (B36.2), (A) + (B18.1) + (B37),
(A) + (B18.1) + (B37.1), (A) + (B18.1) + (B37.2), (A) + (B18.1) + (B38),
(A) + (B18.1) + (B38.1), (A) + (B18.1) + (B38.2), (A) + (B18.1) + (B39),
(A) + (B18.1) + (B39.1), (A) + (B18.1) + (B40), (A) + (B18.1) + (B40.1),
(A) + (B18.1) + (B41), (A) + (B18.1) + (B41.1), (A) + (B18.1) + (B41.2),
(A) + (B18.1) + (B42), (A) + (B18.1) + (B42.1), (A) + (B18.1) + (B42.2),
(A) + (B18.1) + (B42.3), (A) + (B18.1) + (B43), (A) + (B18.1) + (B43.1),

(A) + (B19) + (B20.1), (A) + (B19) + (B21.1), (A) + (B19) + (B22.1),
(A) + (B19) + (B23.1), (A) + (B19) + (B24.1); (A) + (B19) + (B25),
(A) + (B19) + (B26.1), (A) + (B19) + (B27.1), (A) + (B19) + (B28.1),
(A) + (B19) + (B29), (A) + (B19) + (B29.1), (A) + (B19) + (B29.2),
(A) + (B19) + (B29.3), (A) + (B19) + (B30.1), (A) + (B19) + (B31.1),
(A) + (B19) + (B32.1), (A) + (B19) + (B32.2), (A) + (B19) + (B33),
(A) + (B19) + (B34), (A) + (B19) + (B34.1), (A) + (B19) + (B34.2),
(A) + (B19) + (B35), (A) + (B19) + (B36), (A) + (B19) + (B36.1),
(A) + (B19) + (B36.2), (A) + (B19) + (B37), (A) + (B19) + (B37.1),
(A) + (B19) + (B37.2), (A) + (B19) + (B38), (A) + (B19) + (B38.1),
(A) + (B19) + (B38.2), (A) + (B19) + (B39), (A) + (B19) + (B39.1),
(A) + (B19) + (B40), (A) + (B19) + (B40.1), (A) + (B19) + (B41),
(A) + (B19) + (B41.1), (A) + (B19) + (B41.2), (A) + (B19) + (B42),
(A) + (B19) + (B42.1), (A) + (B19) + (B42.2), (A) + (B19) + (B42.3),
(A) + (B19) + (B43), (A) + (B19) + (B43.1),

(A) + (B20.1) + (B21.1), (A) + (B20.1) + (B22.1), (A) + (B20.1) + (B23.1),
(A) + (B20.1) + (B24.1); (A) + (B20.1) + (B25), (A) + (B20.1) + (B26.1),
(A) + (B20.1) + (B27.1), (A) + (B20.1) + (B28.1), (A) + (B20.1) + (B29),
(A) + (B20.1) + (B29.1), (A) + (B20.1) + (B29.2), (A) + (B20.1) + (B29.3),
(A) + (B20.1) + (B30.1), (A) + (B20.1) + (B31.1), (A) + (B20.1) + (B32.1),
(A) + (B20.1) + (B32.2), (A) + (B20) + (B33), (A) + (B20) + (B34),
(A) + (B20) + (B34.1), (A) + (B20) + (B34.2), (A) + (B20) + (B35),
(A) + (B20) + (B36), (A) + (B20) + (B36.1), (A) + (B20) + (B36.2),
(A) + (B20) + (B37), (A) + (B20) + (B37.1), (A) + (B20) + (B37.2),
(A) + (B20) + (B38), (A) + (B20) + (B38.1), (A) + (B20) + (B38.2),
(A) + (B20) + (B39), (A) + (B20) + (B39.1), (A) + (B20) + (B40),
(A) + (B20) + (B40.1), (A) + (B20) + (B41), (A) + (B20) + (B41.1),
(A) + (B20) + (B41.2), (A) + (B20) + (B42), (A) + (B20) + (B42.1),
(A) + (B20) + (B42.2), (A) + (B20) + (B42.3), (A) + (B20) + (B43),
(A) + (B20) + (B43.1),

(A) + (B21.1) + (B22.1), (A) + (B21.1) + (B23.1), (A) + (B21.1) + (B24.1);
(A) + (B21.1) + (B25), (A) + (B21.1) + (B26.1), (A) + (B21.1) + (B27.1),
(A) + (B21.1) + (B28.1), (A) + (B21.1) + (B29), (A) + (B21.1) + (B29.1),
(A) + (B21.1) + (B29.2), (A) + (B21.1) + (B29.3), (A) + (B21.1) + (B30.1),
(A) + (B21.1) + (B31.1), (A) + (B21.1) + (B32.1), (A) + (B21.1) + (B32.2),
(A) + (B21.1) + (B33), (A) + (B21.1) + (B34), (A) + (B21.1) + (B34.1),
(A) + (B21.1) + (B34.2), (A) + (B21.1) + (B35), (A) + (B21.1) + (B36),
(A) + (B21.1) + (B36.1), (A) + (B21.1) + (B36.2), (A) + (B21.1) + (B37),
(A) + (B21.1) + (B37.1), (A) + (B21.1) + (B37.2), (A) + (B21.1) + (B38),
(A) + (B21.1) + (B38.1), (A) + (B21.1) + (B38.2), (A) + (B21.1) + (B39),
(A) + (B21.1) + (B39.1), (A) + (B21.1) + (B40), (A) + (B21.1) + (B40.1),
(A) + (B21.1) + (B41), (A) + (B21.1) + (B41.1), (A) + (B21.1) + (B41.2),
(A) + (B21.1) + (B42), (A) + (B21.1) + (B42.1), (A) + (B21.1) + (B42.2),
(A) + (B21.1) + (B42.3), (A) + (B21.1) + (B43), (A) + (B21.1) + (B43.1),

(A) + (B22.1) + (B23.1), (A) + (B22.1) + (B24.1); (A) + (B22.1) + (B25),
(A) + (B22.1) + (B26.1), (A) + (B22.1) + (B27.1), (A) + (B22.1) + (B28.1),
(A) + (B22.1) + (B29), (A) + (B22.1) + (B29.1), (A) + (B22.1) + (B29.2),
(A) + (B22.1) + (B29.3), (A) + (B22.1) + (B30.1), (A) + (B22.1) + (B31.1),
(A) + (B22.1) + (B32.1), (A) + (B22.1) + (B32.2), (A) + (B22.1) + (B33),
(A) + (B22.1) + (B34), (A) + (B22.1) + (B34.1), (A) + (B22.1) + (B34.2),
(A) + (B22.1) + (B35), (A) + (B22.1) + (B36), (A) + (B22.1) + (B36.1),
(A) + (B22.1) + (B36.2), (A) + (B22.1) + (B37), (A) + (B22.1) + (B37.1),
(A) + (B22.1) + (B37.2), (A) + (B22.1) + (B38), (A) + (B22.1) + (B38.1),
(A) + (B22.1) + (B38.2), (A) + (B22.1) + (B39), (A) + (B22.1) + (B39.1),
(A) + (B22.1) + (B40), (A) + (B22.1) + (B40.1), (A) + (B22.1) + (B41),
(A) + (B22.1) + (B41.1), (A) + (B22.1) + (B41.2), (A) + (B22.1) + (B42),
(A) + (B22.1) + (B42.1), (A) + (B22.1) + (B42.2), (A) + (B22.1) + (B42.3),
(A) + (B22.1) + (B43), (A) + (B22.1) + (B43.1),

(A) + (B23.1) + (B24.1); (A) + (B23.1) + (B25), (A) + (B23.1) + (B26.1),
(A) + (B23.1) + (B27.1), (A) + (B23.1) + (B28.1), (A) + (B23.1) + (B29),
(A) + (B23.1) + (B29.1), (A) + (B23.1) + (B29.2), (A) + (B23.1) + (B29.3),
(A) + (B23.1) + (B30.1), (A) + (B23.1) + (B31.1), (A) + (B23.1) + (B32.1),
(A) + (B23.1) + (B32.2), (A) + (B23.1) + (B33), (A) + (B23.1) + (B34),
(A) + (B23.1) + (B34.1), (A) + (B23.1) + (B34.2), (A) + (B23.1) + (B35),
(A) + (B23.1) + (B36), (A) + (B23.1) + (B36.1), (A) + (B23.1) + (B36.2),
(A) + (B23.1) + (B37), (A) + (B23.1) + (B37.1), (A) + (B23.1) + (B37.2),
(A) + (B23.1) + (B38), (A) + (B23.1) + (B38.1), (A) + (B23.1) + (B38.2),
(A) + (B23.1) + (B39), (A) + (B23.1) + (B39.1), (A) + (B23.1) + (B40),
(A) + (B23.1) + (B40.1), (A) + (B23.1) + (B41), (A) + (B23.1) + (B41.1),
(A) + (B23.1) + (B41.2), (A) + (B23.1) + (B42), (A) + (B23.1) + (B42.1),
(A) + (B23.1) + (B42.2), (A) + (B23.1) + (B42.3), (A) + (B23.1) + (B43),
(A) + (B23.1) + (B43.1),

(A) + (B24.1) + (B25), (A) + (B24.1) + (B26.1), (A) + (B24.1) + (B27.1),
(A) + (B24.1) + (B28.1), (A) + (B24.1) + (B29), (A) + (B24.1) + (B29.1),
(A) + (B24.1) + (B29.2), (A) + (B24.1) + (B29.3), (A) + (B24.1) + (B30.1),
(A) + (B24.1) + (B31.1), (A) + (B24.1) + (B32.1), (A) + (B24.1) + (B32.2),
(A) + (B24.1) + (B33), (A) + (B24.1) + (B34), (A) + (B24.1) + (B34.1),
(A) + (B24.1) + (B34.2), (A) + (B24.1) + (B35), (A) + (B24.1) + (B36),
(A) + (B24.1) + (B36.1), (A) + (B24.1) + (B36.2), (A) + (B24.1) + (B37),
(A) + (B24.1) + (B37.1), (A) + (B24.1) + (B37.2), (A) + (B24.1) + (B38),
(A) + (B24.1) + (B38.1), (A) + (B24.1) + (B38.2), (A) + (B24.1) + (B39),
(A) + (B24.1) + (B39.1), (A) + (B24.1) + (B40), (A) + (B24.1) + (B40.1),
(A) + (B24.1) + (B41), (A) + (B24.1) + (B41.1), (A) + (B24.1) + (B41.2),
(A) + (B24.1) + (B42), (A) + (B24.1) + (B42.1), (A) + (B24.1) + (B42.2),
(A) + (B24.1) + (B42.3), (A) + (B24.1) + (B43), (A) + (B24.1) + (B43.1),
(A) + (B25) + (B26.1), (A) + (B25) + (B27.1), (A) + (B25) + (B28.1),
(A) + (B25) + (B29), (A) + (B25) + (B29.1), (A) + (B25) + (B29.2),
(A) + (B25) + (B29.3), (A) + (B25) + (B30.1), (A) + (B25) + (B31.1),
(A) + (B25) + (B32.1), (A) + (B25) + (B32.2), (A) + (B25) + (B33),
(A) + (B25) + (B34), (A) + (B25) + (B34.1), (A) + (B25) + (B34.2),
(A) + (B25) + (B35), (A) + (B25) + (B36), (A) + (B25) + (B36.1),
(A) + (B25) + (B36.2), (A) + (B25) + (B37), (A) + (B25) + (B37.1),
(A) + (B25) + (B37.2), (A) + (B25) + (B38), (A) + (B25) + (B38.1),
(A) + (B25) + (B38.2), (A) + (B25) + (B39), (A) + (B25) + (B39.1),
(A) + (B25) + (B40), (A) + (B25) + (B40.1), (A) + (B25) + (B41),
(A) + (B25) + (B41.1), (A) + (B25) + (B41.2), (A) + (B25) + (B42),
(A) + (B25) + (B42.1), (A) + (B25) + (B42.2), (A) + (B25) + (B42.3),
(A) + (B25) + (B43), (A) + (B25) + (B43.1),
(A) + (B26.1) + (B27.1), (A) + (B26.1) + (B28.1), (A) + (B26.1) + (B29),
(A) + (B26.1) + (B29.1), (A) + (B26.1) + (B29.2), (A) + (B26.1) + (B29.3),
(A) + (B26.1) + (B30.1), (A) + (B26.1) + (B31.1), (A) + (B26.1) + (B32.1),
(A) + (B26.1) + (B32.2), (A) + (B26.1) + (B33), (A) + (B26.1) + (B34),
(A) + (B26.1) + (B34.1), (A) + (B26.1) + (B34.2), (A) + (B26.1) + (B35),
(A) + (B26.1) + (B36), (A) + (B26.1) + (B36.1), (A) + (B26.1) + (B36.2),
(A) + (B26.1) + (B37), (A) + (B26.1) + (B37.1), (A) + (B26.1) + (B37.2),
(A) + (B26.1) + (B38), (A) + (B26.1) + (B38.1), (A) + (B26.1) + (B38.2),
(A) + (B26.1) + (B39), (A) + (B26.1) + (B39.1), (A) + (B26.1) + (B40),
(A) + (B26.1) + (B40.1), (A) + (B26.1) + (B41), (A) + (B26.1) + (B41.1),
(A) + (B26.1) + (B41.2), (A) + (B26.1) + (B42), (A) + (B26.1) + (B42.1),
(A) + (B26.1) + (B42.2), (A) + (B26.1) + (B42.3), (A) + (B26.1) + (B43),
(A) + (B26.1) + (B43.1),

(A) + (B27.1) + (B28.1), (A) + (B27.1) + (B29), (A) + (B27.1) + (B29.1),
(A) + (B27.1) + (B29.2), (A) + (B27.1) + (B29.3), (A) + (B27.1) + (B30.1),
(A) + (B27.1) + (B31.1), (A) + (B27.1) + (B32.1), (A) + (B27.1) + (B32.2),
(A) + (B27.1) + (B33), (A) + (B27.1) + (B34), (A) + (B27.1) + (B34.1),
(A) + (B27.1) + (B34.2), (A) + (B27.1) + (B35), (A) + (B27.1) + (B36),
(A) + (B27.1) + (B36.1), (A) + (B27.1) + (B36.2), (A) + (B27.1) + (B37),
(A) + (B27.1) + (B37.1), (A) + (B27.1) + (B37.2), (A) + (B27.1) + (B38),
(A) + (B27.1) + (B38.1), (A) + (B27.1) + (B38.2), (A) + (B27.1) + (B39),
(A) + (B27.1) + (B39.1), (A) + (B27.1) + (B40), (A) + (B27.1) + (B40.1),
(A) + (B27.1) + (B41), (A) + (B27.1) + (B41.1), (A) + (B27.1) + (B41.2),
(A) + (B27.1) + (B42), (A) + (B27.1) + (B42.1), (A) + (B27.1) + (B42.2),
(A) + (B27.1) + (B42.3), (A) + (B27.1) + (B43), (A) + (B27.1) + (B43.1),

(A) + (B28.1) + (B29), (A) + (B28.1) + (B29.1), (A) + (B28.1) + (829.2),
(A) + (B28.1) + (B29.3), (A) + (B28.1) + (B30.1), (A) + (B28.1) + (B31.1),
(A) + (B28.1) + (B32.1), (A) + (B28.1) + (B32.2), (A) + (B28.1) + (B33),
(A) + (B28.1) + (B34), (A) + (B28.1) + (B34.1), (A) + (B28.1) + (B34.2),
(A) + (B28.1) + (B35), (A) + (B28.1) + (B36), (A) + (B28.1) + (B36.1),
(A) + (B28.1) + (B36.2), (A) + (B28.1) + (B37), (A) + (B28.1) + (B37.1),
(A) + (B28.1) + (B37.2), (A) + (B28.1) + (B38), (A) + (B28.1) + (B38.1),
(A) + (B28.1) + (B38.2), (A) + (B28.1) + (B39), (A) + (B28.1) + (B39.1),
(A) + (B28.1) + (B40), (A) + (B28.1) + (B40.1), (A) + (B28.1) + (B41),
(A) + (B28.1) + (B41.1), (A) + (B28.1) + (B41.2), (A) + (B28.1) + (B42),
(A) + (B28.1) + (B42.1), (A) + (B28.1) + (B42.2), (A) + (B28.1) + (B42.3),
(A) + (B28.1) + (B43), (A) + (B28.1) + (B43.1),

(A) + (B29) + (B30.1), (A) + (B29) + (B31.1), (A) + (B29) + (B32.1),
(A) + (B29) + (B32.2), (A) + (B29) + (B33), (A) + (B29) + (B34),
(A) + (B29) + (B34.1), (A) + (B29) + (B34.2), (A) + (B29) + (B35),
(A) + (B29) + (B36), (A) + (B29) + (B36.1), (A) + (B29) + (B36.2),
(A) + (B29) + (B37), (A) + (B29) + (B37.1), (A) + (B29) + (B37.2),
(A) + (B29) + (B38), (A) + (B29) + (B38.1), (A) + (B29) + (B38.2),
(A) + (B29) + (B39), (A) + (B29) + (B39.1), (A) + (B29) + (B40),
(A) + (B29) + (B40.1), (A) + (B29) + (B41), (A) + (B29) + (B41.1),
(A) + (B29) + (B41.2), (A) + (B29) + (B42), (A) + (B29) + (B42.1),
(A) + (B29) + (B42.2), (A) + (B29) + (B42.3), (A) + (B29) + (B43),
(A) + (B29) + (B43.1),

(A) + (B29.1) + (B30.1), (A) + (B29.1) + (B31.1), (A) + (B29.1) + (B32.1),
(A) + (B29.1) + (B32.2), (A) + (B29.1) + (B33), (A) + (B29.1) + (B34),
(A) + (B29.1) + (B34.1), (A) + (B29.1) + (B34.2), (A) + (B29.1) + (B35),
(A) + (B29.1) + (B36), (A) + (B29.1) + (B36.1), (A) + (B29.1) + (B36.2),
(A) + (B29.1) + (B37), (A) + (B29.1) + (B37.1), (A) + (B29.1) + (B37.2),
(A) + (B29.1) + (B38), (A) + (B29.1) + (B38.1), (A) + (B29.1) + (B38.2),
(A) + (B29.1) + (B39), (A) + (B29.1) + (B39.1), (A) + (B29.1) + (B40),
(A) + (B29.1) + (B40.1), (A) + (B29.1) + (B41), (A) + (B29.1) + (B41.1),
(A) + (B29.1) + (B41.2), (A) + (B29.1) + (B42), (A) + (B29.1) + (B42.1),
(A) + (B29.1) + (B42.2), (A) + (B29.1) + (B42.3), (A) + (B29.1) + (B43),
(A) + (B29.1) + (B43.1),

(A) + (B29.2) + (B30.1), (A) + (B29.2) + (B31.1), (A) + (B29.2) + (B32.1),
(A) + (B29.2) + (B32.2), (A) + (B29.2) + (B33), (A) + (B29.2) + (B34),
(A) + (B29.2) + (B34.1), (A) + (B29.2) + (B34.2), (A) + (B29.2) + (B35),
(A) + (B29.2) + (B36), (A) + (B29.2) + (B36.1), (A) + (B29.2) + (B36.2),
(A) + (B29.2) + (B37), (A) + (B29.2) + (B37.1), (A) + (B29.2) + (B37.2),
(A) + (B29.2) + (B38), (A) + (B29.2) + (B38.1), (A) + (B29.2) + (B38.2),
(A) + (B29.2) + (B39), (A) + (B29.2) + (B39.1), (A) + (B29.2) + (B40),
(A) + (B29.2) + (B40.1), (A) + (B29.2) + (B41), (A) + (B29.2) + (B41.1),
(A) + (B29.2) + (B41.2), (A) + (B29.2) + (B42), (A) + (B29.2) + (B42.1),
(A) + (B29.2) + (B42.2), (A) + (B29.2) + (B42.3), (A) + (B29.2) + (B43),
(A) + (B29.2) + (B43.1),

(A) + (B29.3) + (B30.1), (A) + (B29.3) + (B31.1), (A) + (B29.3) + (B32.1),
(A) + (B29.3) + (B32.2), (A) + (B29.3) + (B33), (A) + (B29.3) + (B34),
(A) + (B29.3) + (B34.1), (A) + (B29.3) + (B34.2), (A) + (B29.3) + (B35),
(A) + (B29.3) + (B36), (A) + (B29.3) + (B36.1), (A) + (B29.3) + (B36.2),
(A) + (B29.3) + (B37), (A) + (B29.3) + (B37.1), (A) + (B29.3) + (B37.2),
(A) + (B29.3) + (B38), (A) + (B29.3) + (B38.1), (A) + (B29.3) + (B38.2),
(A) + (B29.3) + (B39), (A) + (B29.3) + (B39.1), (A) + (B29.3) + (B40),
(A) + (B29.3) + (B40.1), (A) + (B29.3) + (B41), (A) + (B29.3) + (B41.1),
(A) + (B29.3) + (B41.2), (A) + (B29.3) + (B42), (A) + (B29.3) + (B42.1),
(A) + (B29.3) + (B42.2), (A) + (B29.3) + (B42.3), (A) + (B29.3) + (B43),
(A) + (B29.3) + (B43.1),

(A) + (B30.2) + (B31.1), (A) + (B30.2) + (B32.1), (A) + (B30.2) + (B32.2),
(A) + (B30.2) + (B33), (A) + (B30.2) + (B34), (A) + (B30.2) + (B34.1),
(A) + (B30.2) + (B34.2), (A) + (B30.2) + (B35), (A) + (B30.2) + (B36),
(A) + (B30.2) + (B36.1), (A) + (B30.2) + (B36.2), (A) + (B30.2) + (B37),
(A) + (B30.2) + (B37.1), (A) + (B30.2) + (B37.2), (A) + (B30.2) + (B38),
(A) + (B30.2) + (B38.1), (A) + (B30.2) + (B38.2), (A) + (B30.2) + (B39),
(A) + (B30.2) + (B39.1), (A) + (B30.2) + (B40), (A) + (B30.2) + (B40.1),
(A) + (B30.2) + (B41), (A) + (B30.2) + (B41.1), (A) + (B30.2) + (B41.2),
(A) + (B30.2) + (B42), (A) + (B30.2) + (B42.1), (A) + (B30.2) + (B42.2),
(A) + (B30.2) + (B42.3), (A) + (B30.2) + (B43), (A) + (B30.2) + (B43.1),

(A) + (B31.2) + (B32.1), (A) + (B31.2) + (B32.2), (A) + (B31.2) + (B33),
(A) + (B31.2) + (B34), (A) + (B31.2) + (B34.1), (A) + (B31.2) + (B34.2),
(A) + (B31.2) + (B35), (A) + (B31.2) + (B36), (A) + (B31.2) + (B36.1),
(A) + (B31.2) + (B36.2), (A) + (B31.2) + (B37), (A) + (B31.2) + (B37.1),
(A) + (B31.2) + (B37.2), (A) + (B31.2) + (B38), (A) + (B31.2) + (B38.1),
(A) + (B31.2) + (B38.2), (A) + (B31.2) + (B39), (A) + (B31.2) + (B39.1),
(A) + (B31.2) + (B40), (A) + (B31.2) + (B40.1), (A) + (B31.2) + (B41),
(A) + (B31.2) + (B41.1), (A) + (B31.2) + (B41.2), (A) + (B31.2) + (B42),
(A) + (B31.2) + (B42.1), (A) + (B31.2) + (B42.2), (A) + (B31.2) + (B42.3),
(A) + (B31.2) + (B43), (A) + (B31.2) + (B43.1),

(A) + (B32.1) + (B33), (A) + (B32.1) + (B34), (A) + (B32.1) + (B34.1),
(A) + (B32.1) + (B34.2), (A) + (B32.1) + (B35), (A) + (B32.1) + (B36),
(A) + (B32.1) + (B36.1), (A) + (B32.1) + (B36.2), (A) + (B32.1) + (B37),
(A) + (B32.1) + (B37.1), (A) + (B32.1) + (B37.2), (A) + (B32.1) + (B38),
(A) + (B32.1) + (B38.1), (A) + (B32.1) + (B38.2), (A) + (B32.1) + (B39),
(A) + (B32.1) + (B39.1), (A) + (B32.1) + (B40), (A) + (B32.1) + (B40.1),
(A) + (B32.1) + (B41), (A) + (B32.1) + (B41.1), (A) + (B32.1) + (B41.2),
(A) + (B32.1) + (B42), (A) + (B32.1) + (B42.1), (A) + (B32.1) + (B42.2),
(A) + (B32.1) + (B42.3), (A) + (B32.1) + (B43), (A) + (B32.1) + (B43.1),
(A) + (B32.2) + (B33), (A) + (B32.2) + (B34), (A) + (B32.2) + (B34.1),
(A) + (B32.2) + (B34.2), (A) + (B32.2) + (B35), (A) + (B32.2) + (B36),
(A) + (B32.2) + (B36.1), (A) + (B32.2) + (B36.2), (A) + (B32.2) + (B37),
(A) + (B32.2) + (B37.1), (A) + (B32.2) + (B37.2), (A) + (B32.2) + (B38),
(A) + (B32.2) + (B38.1), (A) + (B32.2) + (B38.2), (A) + (B32.2) + (B39),
(A) + (B32.2) + (B39.1), (A) + (B32.2) + (B40), (A) + (B32.2) + (B40.1),
(A) + (B32.2) + (B41), (A) + (B32.2) + (B41.1), (A) + (B32.2) + (B41.2),
(A) + (B32.2) + (B42), (A) + (B32.2) + (B42.1), (A) + (B32.2) + (B42.2),
(A) + (B32.2) + (B42.3), (A) + (B32.2) + (B43), (A) + (B32.2) + (B43.1),

(A) + (B33) + (B34), (A) + (B33) + (B34.1), (A) + (B33) + (B34.2),
(A) + (B33) + (B35), (A) + (B33) + (B36), (A) + (B33) + (B36.1),
(A) + (B33) + (B36.2), (A) + (B33) + (B37), (A) + (B33) + (B37.1),
(A) + (B33) + (B37.2), (A) + (B33) + (B38), (A) + (B33) + (B38.1),
(A) + (B33) + (B38.2), (A) + (B33) + (B39), (A) + (B33) + (B39.1),
(A) + (B33) + (B40), (A) + (B33) + (B40.1), (A) + (B33) + (B41),
(A) + (B33) + (B41.1), (A) + (B33) + (B41.2), (A) + (B33) + (B42),
(A) + (B33) + (B42.1), (A) + (B33) + (B42.2), (A) + (B33) + (B42.3),
(A) + (B33) + (B43), (A) + (B33) + (B43.1),

(A) + (B34) + (B35), (A) + (B34) + (B36), (A) + (B34) + (B36.1),
(A) + (B34) + (B36.2), (A) + (B34) + (B37), (A) + (B34) + (B37.1),
(A) + (B34) + (B37.2), (A) + (B34) + (B38), (A) + (B34) + (B38.1),
(A) + (B34) + (B38.2), (A) + (B34) + (B39), (A) + (B34) + (B39.1),
(A) + (B34) + (B40), (A) + (B34) + (B40.1), (A) + (B34) + (B41),
(A) + (B34) + (B41.1), (A) + (B34) + (B41.2), (A) + (B34) + (B42),
(A) + (B34) + (B42.1), (A) + (B34) + (B42.2), (A) + (B34) + (B42.3),
(A) + (B34) + (B43), (A) + (B34) + (B43.1),

(A) + (B34.1) + (B35), (A) + (B34.1) + (B36), (A) + (B34.1) + (B36.1),
(A) + (B34.1) + (B36.2), (A) + (B34.1) + (B37), (A) + (B34.1) + (B37.1),
(A) + (B34.1) + (B37.2), (A) + (B34.1) + (B38), (A) + (B34.1) + (B38.1),
(A) + (B34.1) + (B38.2), (A) + (B34.1) + (B39), (A) + (B34.1) + (B39.1),
(A) + (B34.1) + (B40), (A) + (B34.1) + (B40.1), (A) + (B34.1) + (B41),
(A) + (B34.1) + (B41.1), (A) + (B34.1) + (B41.2), (A) + (B34.1) + (B42),
(A) + (B34.1) + (B42.1), (A) + (B34.1) + (B42.2), (A) + (B34.1) + (B42.3),
(A) + (B34.1) + (B43), (A) + (B34.1) + (B43.1),

(A) + (B34.2) + (B35), (A) + (B34.2) + (B36), (A) + (B34.2) + (B36.1),
(A) + (B34.2) + (B36.2), (A) + (B34.2) + (B37), (A) + (B34.2) + (B37.1),
(A) + (B34.2) + (B37.2), (A) + (B34.2) + (B38), (A) + (B34.2) + (B38.1),
(A) + (B34.2) + (B38.2), (A) + (B34.2) + (B39), (A) + (B34.2) + (B39.1),
(A) + (B34.2) + (B40), (A) + (B34.2) + (B40.1), (A) + (B34.2) + (B41),
(A) + (B34.2) + (B41.1), (A) + (B34.2) + (B41.2), (A) + (B34.2) + (B42),
(A) + (B34.2) + (B42.1), (A) + (B34.2) + (B42.2), (A) + (B34.2) + (B42.3),
(A) + (B34.2) + (B43), (A) + (B34.2) + (B43.1),
(A) + (B35) + (B36), (A) + (B35) + (B36.1), (A) + (B35) + (B36.2),
(A) + (B35) + (B37), (A) + (B35) + (B37.1), (A) + (B35) + (B37.2),
(A) + (B35) + (B38), (A) + (B35) + (B38.1), (A) + (B35) + (B38.2),
(A) + (B35) + (B39), (A) + (B35) + (B39.1), (A) + (B35) + (B40),
(A) + (B35) + (B40.1), (A) + (B35) + (B41), (A) + (B35) + (B41.1),
(A) + (B35) + (B41.2), (A) + (B35) + (B42), (A) + (B35) + (B42.1),
(A) + (B35) + (B42.2), (A) + (B35) + (B42.3), (A) + (B35) + (B43),
(A) + (B35) + (B43.1),

(A) + (B36) + (B37), (A) + (B36) + (B37.1), (A) + (B36) + (B37.2),
(A) + (B36) + (B38), (A) + (B36) + (B38.1), (A) + (B36) + (B38.2),
(A) + (B36) + (B39), (A) + (B36) + (B39.1), (A) + (B36) + (B40),
(A) + (B36) + (B40.1), (A) + (B36) + (B41), (A) + (B36) + (B41.1),
(A) + (B36) + (B41.2), (A) + (B36) + (B42), (A) + (B36) + (B42.1),
(A) + (B36) + (B42.2), (A) + (B36) + (B42.3), (A) + (B36) + (B43),
(A) + (B36) + (B43.1),

(A) + (B36.2) + (B37), (A) + (B36.2) + (B37.1), (A) + (B36.2) + (B37.2),
(A) + (B36.2) + (B38), (A) + (B36.2) + (B38.1), (A) + (B36.2) + (B38.2),
(A) + (B36.2) + (B39), (A) + (B36.2) + (B39.1), (A) + (B36.2) + (B40),
(A) + (B36.2) + (B40.1), (A) + (B36.2) + (B41), (A) + (B36.2) + (B41.1),
(A) + (B36.2) + (B41.2), (A) + (B36.2) + (B42), (A) + (B36.2) + (B42.1),
(A) + (B36.2) + (B42.2), (A) + (B36.2) + (B42.3), (A) + (B36.2) + (B43),
(A) + (B36.2) + (B43.1),

(A) + (B37) + (B38), (A) + (B37) + (B38.1), (A) + (B37) + (B38.2),
(A) + (B37) + (B39), (A) + (B37) + (B39.1), (A) + (B37) + (B40),
(A) + (B37) + (B40.1), (A) + (B37) + (B41), (A) + (B37) + (B41.1),
(A) + (B37) + (B41.2), (A) + (B37) + (B42), (A) + (B37) + (B42.1),
(A) + (B37) + (B42.2), (A) + (B37) + (B42.3), (A) + (B37) + (B43),
(A) + (B37) + (B43.1),
(A) + (B37.2) + (B38), (A) + (B37.2) + (B38.1), (A) + (B37.2) + (B38.2),
(A) + (B37.2) + (B39), (A) + (B37.2) + (B39.1), (A) + (B37.2) + (B40),
(A) + (B37.2) + (B40.1), (A) + (B37.2) + (B41), (A) + (B37.2) + (B41.1),
(A) + (B37.2) + (B41.2), (A) + (B37.2) + (B42), (A) + (B37.2) + (B42.1),
(A) + (B37.2) + (B42.2), (A) + (B37.2) + (B42.3), (A) + (B37.2) + (B43),
(A) + (B37.2) + (B43.1),

(A) + (B38) + (B39), (A) + (B38) + (B39.1), (A) + (B38) + (B40),
(A) + (B38) + (B40.1), (A) + (B38) + (B41), (A) + (B38) + (B41.1),
(A) + (B38) + (B41.2), (A) + (B38) + (B42), (A) + (B38) + (B42.1),
(A) + (B38) + (B42.2), (A) + (B38) + (B42.3), (A) + (B38) + (B43),
(A) + (B38) + (B43.1),
(A) + (B38.2) + (B39), (A) + (B38.2) + (B39.1), (A) + (B38.2) + (B40),
(A) + (B38.2) + (B40.1), (A) + (B38.2) + (B41), (A) + (B38.2) + (B41.1),
(A) + (B38.2) + (B41.2), (A) + (B38.2) + (B42), (A) + (B38.2) + (B42.1),
(A) + (B38.2) + (B42.2), (A) + (B38.2) + (B42.3), (A) + (B38.2) + (B43),
(A) + (B38.2) + (B43.1),

(A) + (B39) + (B40), (A) + (B39) + (B40.1), (A) + (B39) + (B41),
(A) + (B39) + (B41.1), (A) + (B39) + (B41.2), (A) + (B39) + (B42),
(A) + (B39) + (B42.1), (A) + (B39) + (B42.2), (A) + (B39) + (B42.3),
(A) + (B39) + (B43), (A) + (B39) + (B43.1),

(A) + (B39.1) + (B40), (A) + (B39.1) + (B40.1), (A) + (B39.1) + (B41),
(A) + (B39.1) + (B41.1), (A) + (B39.1) + (B41.2), (A) + (B39.1) + (B42),
(A) + (B39.1) + (B42.1), (A) + (B39.1) + (B42.2), (A) + (B39.1) + (B42.3),
(A) + (B39.1) + (B43), (A) + (B39.1) + (B43.1),

(A) + (B40) + (B41), (A) + (B40) + (B41.1), (A) + (B40) + (B41.2),
(A) + (B40) + (B42), (A) + (B40) + (B42.1), (A) + (B40) + (B42.2),
(A) + (B40) + (B42.3), (A) + (B40) + (B43), (A) + (B40) + (B43.1),
(A) + (B40.1) + (B41), (A) + (B40.1) + (B41.1), (A) + (B40.1) + (B41.2),
(A) + (B40.1) + (B42), (A) + (B40.1) + (B42.1), (A) + (B40.1) + (B42.2),
(A) + (B40.1) + (B42.3), (A) + (B40.1) + (B43), (A) + (B40.1) + (B43.1),
(A) + (B41) + (B42), (A) + (B41) + (B42.1), (A) + (B41) + (B42.2),
(A) + (B41) + (B42.3), (A) + (B41) + (B43), (A) + (B41) + (B43.1),
(A) + (B41.2) + (B42), (A) + (B41.2) + (B42.1), (A) + (B41.2) + (B42.2),
(A) + (B41.2) + (B42.3), (A) + (B41.2) + (B43), (A) + (B41.2) + (B43.1), and
(A) + (B42) + (B43), (A) + (B42) + (B43.1),
wherein compound (A) is selected from the list of compounds of table A (compounds A1 to A145) and the (B) herbicides are defined as set forth above.

The herbicides (A), optionally in combination with herbicides (B), can also be applied together with other type (C) active ingredients useful in the treatment of lawn or turf. Type (C) active ingredients useful in the treatment of lawn or turf can be, for instance, insecticides, acaricides, fungicides, safeners, fertilizers and/or growth regulators or nutrients useful for treating lawn or turf against phytopathogenic diseases or for growth regulation or growth promotion of lawn or turf.

Fungicidally active compounds which can be used in combination with the herbicide combinations according to the invention are preferably commercially available active compounds, for example (analogously to the herbicides, the compounds are generally referred to by their common names):
2-phenylphenol; 8-hydroxyquinoline sulfate; acibenzolar-S-methyl; actinovate;
aldimorph; amidoflumet; ampropylfos; ampropylfos-potassium; andoprim; anilazine;
azaconazole; azoxystrobin; benalaxyl; benodanil; benomyl; benthiavalicarb-isopropyl;
benzamacril; benzamacril-isobutyl; binapacryl; biphenyl; bitertanol; blasticidin-S;
boscalid; bromuconazole; bupirimate; buthiobate; butylamine; calcium polysulfide;
capsimycin; captafol; captan; carbendazim; carboxin; carpropamid; carvone;
chinomethionat; chlobenthiazone; chlorfenazole; chloroneb; chlorothalonil; chlozolinate;
cis-1-(4-chiorophenyl)-2-(1H-1,2,4-triazol-1-yl)cycloheptanol; clozylacon; cyazofamid;
cyflufenamid; cymoxanil; cyproconazole; cyprodinil; cyprofuram; Dagger G; debacarb;
dichlofluanid; dichlone; dichlorophen; diclocymet; diclomezine; dicloran; diethofencarb;
difenoconazole; diflumetorim; dimethirimol; dimethomorph; dimoxystrobin; diniconazole;
diniconazole-M; dinocap; diphenylamine; dipyrithione; ditalimfos; dithianon; dodine;
drazoxolon; edifenphos; epoxiconazole; ethaboxam; ethirimol; etridiazole; famoxadone;
fenamidone; fenapanil; fenarimol; fenbuconazole; fenfuram; fenhexamid; fenitropan;
fenoxanil; fenpiclonil; fenpropidin; fenpropimorph; ferbam; fluazinam; flubenzimine;
fludioxonil; flumetover; flumorph; fluoromide; fluoxastrobin; fluquinconazole; flurprimidol;
flusilazole; flusulfamide; flutolanil; flutriafol; folpet; fosetyl-Al; fosetyl-sodium;
fuberidazole; furalaxyl; furametpyr; furcarbanil; furmecyclox; guazatine;
hexachlorobenzene; hexaconazole; hymexazol; imazalil; imibenconazole; iminoctadine triacetate; iminoctadine tris(albesilate); iodocarb; ipconazole; iprobenfos; iprodione;
iprovalicarb; irumamycin; isoprothiolane; isovaledione; kasugamycin; kresoxim-methyl;
mancozeb; maneb; meferimzone; mepanipyrim; mepronil; metalaxyl; metalaxyl-M;
metconazole; methasulfocarb; methfuroxam; methyl 1-(2,3-dihydro-2,2-dimethyl-1H-inden-1-yl)-1 H-imidazole-5-carboxylate; methyl 2-[[[cyclopropyl[(4-methoxyphenyl)imino]methyl]thio]methyl]-.alpha.-(methoxymethylene)benzeneacetate;
methyl 2-[2-[3-(4-chlorophenyl)-methyl-allylideneaminooxymethyl]phenyl]-3-methoxyacrylate; metiram; metominostrobin; metrafenone; metsulfovax; mildiomycin;
monopotassium carbonate; myclobutanil; myclozolin; nabam, N-(3-ethyl-3,5,5-trimethylcyclohexyl)-3-formylamino-2-hydroxy-benzamide; N-(6-methoxy-3-pyridinyl)cyclopropanecarboxamide; N-butyl-8-(1,1-dimethylethyl)-1-oxaspiro[4.5]decan-3-amine; natamycin; nitrothal-isopropyl; noviflumuron; nuarimol; ofurace; orysastrobin;
oxadixyl; oxolinic acid; oxpoconazole; oxycarboxin; oxyfenthiin; paclobutrazol;
pefurazoate; penconazole; pencycuron; penthiopyrad; phosdiphen; phthalide;
picobenzamid; picoxystrobin; piperalin; polyoxins; polyoxorim; probenazole; prochloraz;
procymidone; propamocarb; propanosine-sodium; propiconazole; propineb;
proquinazid; prothioconazole; pyraclostrobin; pyrazophos; pyrifenox; pyrimethanil;
pyroquilon; pyroxyfur; pyrrolnitrine; quinconazole; quinoxyfen; quintozene; silthiofam;
simeconazole; sodium tetrathiocarbonate; spiroxamine; sulfur; tebuconazole;
tecloftalam; tecnazene; tetcyclacis; tetraconazole; thiabendazole; thicyofen;
thifluzamide; thiophanate-methyl; thiram; tiadinil; tioxymid; tolclofos-methyl; tolylfluanid;
triadimefon; triadimenol; triazbutil; triazoxide; tricyclamide; tricyclazole; tridemorph;
trifloxystrobin; triflumizole; triforine; triticonazole; uniconazole; validamycin A;vinclozolin; zineb; ziram; zoxamide;
(2S)-N-[2-[4-[[3-(4-chlorophenyl)2-propynyl]oxy]-3-methoxyphenyl]ethyl]-3-methyl- 2-[(methylsulfonyl)amino]-butanamide; 1-(1-naphthalenyl)-1H-pyrrole-2,5-dione; 2,3,5,6-tetrachloro-4-(methylsulfonyl)pyridine; 2,4-dihydro-5-methoxy-2-methyl-4-[[[[1-[3-(trifluoromethyl)phenyl]ethylidene]amino]oxy]methyl]phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridinecarboxamide; 3,4,5-trichloro-2,6-pyridinedicarbonitrile; 3-[(3-bromo-6-fluoro-2-methyl-1H-indol-1-yl)sulfonyl]-N,N-dimethyl-1 H-1,2,4-triazole-1-sulfonamide; copper salts and copper preparations, such as Bordeaux mixture; copper hydroxide; copper naphthenate; copper oxychloride; copper sulfate; cufraneb; copper(I) oxide; mancopper; oxine-copper.

Preferred fungicides are selected from the group consisting of benalaxyl, bitertanol, bromuconazole, captafol, carbendazim, carpropamid, cyazofamid, cyproconazole, diethofencarb, edifenphos, fenpropimorph, fentine, fluquinconazole, fosetyl, fluoroimide, folpet, iminoctadine, iprodionem, iprovalicarb, kasugamycin, maneb, nabam, pencycuron, prochloraz, propamocarb, propineb, pyrimethanil, spiroxamine, quintozene, tebuconazole, tolylfluanid, triadimefon, triadimenol, trifloxystrobin, zineb.

Insecticidal, acaricidal, nematicidal, miticidal and related active compounds are, for example (analogously to the herbicides and fungicides, the compounds are, if possible, referred to by their common names):
alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb, acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion, acrinathrin, allethrin (d-cis-trans, d-trans), beta-cyfluthrin, bifenthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (1 R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1 R-trans isomer), prallethrin, profluthrin, protrifenbute, pyresmethrin, resmethrin, RU 15525, silafluofen, taufluvalinate, tefluthrin, terallethrin, tetramethrin (-1 R- isomer), tralomethrin, transfluthrin, ZXI 8901, pyrethrins (pyrethrum), DDT, indoxacarb, acetamiprid, clothianidin, dinotefuran, imidacloprid, nitenpyram, nithiazine, thiacloprid, thiamethoxam, nicotine, bensultap, cartap, camphechlor, chlordane, endosulfan, gamma-HCH, HCH, heptachlor, lindane, methoxychlor spinosad, acetoprole, ethiprole, fipronil, vaniliprole, avermectin, emamectin, emamectin-benzoate, ivermectin, milbemycin, diofenolan, epofenonane, fenoxycarb, hydroprene, kinoprene, methoprene, pyriproxifen, triprene, chromafenozide, halofenozide, methoxyfenozide, tebufenozide, bistrifluron, chlofluazuron, diflubenzuron, fluazuron, flucycloxuron, flufenoxuron, hexaflumuron, lufenuron, novaluron, noviflumuron, penfluron, teflubenzuron, triflumuron, buprofezin, cyromazine, diafenthiuron, azocyclotin, cyhexatin, fenbutatin-oxide, chlorfenapyr, binapacyrl, dinobuton, dinocap, DNOC, fenazaquin, fenpyroximate, pyrimidifen, pyridaben, tebufenpyrad, tolfenpyrad, hydramethylnon, dicofol, rotenone, acequinocyl, fluacrypyrim, Bacillus thuringiensis strains, spirodiclofen, spiromesifen, 3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester, CAS-Reg.-No.: 382608-10-8) and carbonic acid, cis-3-(2,5-dimethylphenyl)-8-methoxy-2-oxo-1-azaspiro[4.5]dec-3-en-4-yl ethyl ester (CAS-Reg.-No.: 203313-25-1), flonicamid, amitraz, propargite, N2-[1,1-dimethyl-2-(methylsulfonyl)ethyl]-3-iodo-N1-[2-methyl-4-[1,2,2,2-tetrafluoro-1-(trifluoromethyl)ethyl]phenyl]-1,2-benzenedicarboxamide (CAS-Reg.-No.: 272451-65-7), thiocyclam hydrogen oxalate, thiosultap-sodium, azadirachtin, Bacillus spec., Beauveria spec., codlemone, Metarrhizium spec., Paecilomyces spec., thuringiensin, Verticillium spec., aluminum phosphide, methyl bromide, sulfuryl fluoride, cryolite, flonicamid, pymetrozine, clofentezine, etoxazole, hexythiazox, amidoflumet, benclothiaz, benzoximate, bifenazate, bromopropylate, buprofezin, chinomethionat, chlordimeform, chlorobenzilate, chloropicrin, clothiazoben, cycloprene, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyridalyl, sulfluramid, tetradifon, tetrasul, triarathene, verbutin.

Insecticides which may preferably be used together with the herbicides are, for example, the following:
acetamiprid, acrinathrin, aldicarb, amitraz, acinphos-methyl, bifenthrin, cyfluthrin, β-cyfluthrin, carbaryl, cypermethrin, deltamethrin, endosulfan, ethoprophos, fenamiphos, fenthion, fipronil, imidacloprid, methamidophos, methiocarb, niclosamide, oxydemeton-methyl, prothiophos, silafluofen, thiacloprid, thiodicarb, tralomethrin, triazophos, trichlorfon, triflumuron, terbufos, fonofos, phorate, chlorpyriphos, carbofuran, tefluthrin.

Preferred mixtures comprising insecticidal active ingredients are for example:
Preferred are combinations of a compound (A) selected from the list of compounds of table 1 (compounds A1 to A145) and an insecticide (C)
   (A) + (C1) imidacloprid
   (A) + (C2) thiametoxam
   (A) + (C3) imidacloprid
   (A) + (C4) fipronil
   (A) + (C5) bifenthrin

Preferred are combinations of a compound (A) selected from the list of compounds of table A (compounds A1 to A145) and an insecticide (C) such as (C1), (C2),.(C3), (C4) and (C5) mentioned above, optionally with another herbicide (B) according to the following scheme:
(A) + (B1) + (C), (A) + (B2) + (C), (A) + (B29.4) + (C), (A) + (B29.4) + (C), (A) + (B3.1) + (C), (A) + (B3.2) + (C), (A) + (B4) + (C), (A) + (B29.4) + (C), (A) + (B29.4) + (C), (A) + (B5.1) + (C), (A) + (B5.2) + (C), (A) + (B5.3) + (C), (A) + (B29.4) + (C), (A) + (B29.4) + (C),
(A) + (B8) + (C), (A) + (B29.4) + (C), (A) + (B8.2) + (C), (A) + (B9) + (C), (A) + (B29.4) + (C), (A) + (B29.4) + (C), (A) + (B29.4) + (C), (A) + (B29.4) + (C), (A) + (B10.1) + (C), (A) + (B29.4) + (C), (A) + (B11.1) + (C), (A) + (B29.4) + (C), (A) + (B11.3) + (C), (A) + (B29.4) + (C), (A) + (B12.1) + (C), (A) + (B29.4) + (C), (A) + (B29.4) + (C), (A) + (B29.4) + (C), (A) + (B13.1) + (C), (A) + (B13.2) + (C), (A) + (B13.3) + (C), (A) + (B13.4) + (C), (A) + (B13.5) + (C), (A) + (B29.4) + (C), (A) + (B14) + (C), (A) + (B14.1) + (C), (A) + (B14.2) + (C), (A) + (B29.4) + (C), (A) + (B15) + (C), (A) + (B15.1) + (C), (A) + (B29.4) + (C), (A) + (B29.4) + (C), (A) + (B17) + (C), (A) + (B29.4) + (C), (A) + (B18) + (C), (A) + (B29.4) + (C), (A) + (B29.4) + (C), (A) + (B29.4) + (C), (A) + (B19.1) + (C), (A) + (B19.2) + (C), (A) + (B19.3) + (C), (A) + (B19.4) + (C), (A) + (B19.5) + (C), (A) + (B19.6) + (C), (A) + (B19.7) + (C), (A) + (B20) + (C), (A) + (B29.4) + (C), (A) + (B21) + (C), (A) + (B29.4) + (C), (A) + (B22) + (C), (A) + (B29.4) + (C), (A) + (B23) + (C), (A) + (B29.4) + (C), (A) + (B24) + (C), (A) + (B29.4) + (C); (A) + (B29.4) + (C), (A) + (B26) + (C), (A) + (B29.4) + (C), (A) + (B27) + (C), (A) + (B29.4) + (C), (A) + (B28) + (C), (A) + (B29.4) + (C), (A) + (B29.4) + (C), (A) + (B29.4) + (C), (A) + (B29.4) + (C), (A) + (B29.4) + (C), (A) + (B30) + (C), (A) + (B30.1) + (C), (A) + (B30.2) + (C), (A) + (B30.3) + (C), (A) + (B31) + (C), (A) + (B31.1) + (C), (A) + (B31.2) + (C), (A) + (B31.3) + (C), (A) + (B32) + (C), (A) + (B32.1) + (C), (A) + (B32.2) + (C), (A) + (B33) + (C), (A) + (B34) + (C), (A) + (B34.1) + (C), (A) + (B34.2) + (C), (A) + (B35) + (C), (A) + (B36) + (C), (A) + (B36.1) + (C), (A) + (B36.2) + (C), (A) + (B37) + (C), (A) + (B37.1) + (C), (A) + (B37.2) + (C), (A) + (B38) + (C), (A) + (B38.1) + (C), (A) + (B38.2) + (C), (A) + (B39) + (C), (A) + (B39.1) + (C), (A) + (B40) + (C), (A) + (B40.1) + (C), (A) + (B41) + (C), (A) + (B41.1) + (C), (A) + (B41.2) + (C), (A) + (B42) + (C), (A) + (B42.1) + (C), (A) + (B42.2) + (C), (A) + (B42.3) + (C), (A) + (B43) + (C), (A) + (B43.1) + (C).

The above combinations preferably comprise imidacloprid or thiamethoxam as components (C).

The above combinations also optionally additionally, or preferably comprise safeners as components (C). Safeners are mentioned in the context of herbicidal combination partners already. Examples for safeners are :
Benoxacor, Cloquintocet(-mexyl), Cyometrinil, Cyprosulfamide, Dichlormid, Fenchlorazole(-ethyl), Fenclorim, Flurazole, Fluxofenim, Furilazole, Isoxadifen(-ethyl), Mefenpyr(-diethyl), Naphthalic anhydride, Oxabetrinil, "AD-67" oder "MON 4660" (= 3-Dichloracetyl-l-oxa-3-aza-spiro[4,5]decan), "TI-35" (= 1-Dichloracetyl-azepan),
"Dimepiperate" oder "MY-93" (= Piperidin-1-thiocarbonsaure-S-1-methyl-1-phenylethylester), "Daimuron" oder "SK 23" (= 1-(1-Methyl-1-phenylethyl)-3-p-tolylhamstoff), "Cumyluron" = "JC-940" (= 3-(2-Chlorphenylmethyl)-1-(1-methyl-1-phenylethyl)harnstoff),
   preferably Benoxacor, Cloquintocet(-mexyl), Cyprosulfamide, Isoxadifen(-ethyl) or Mefenpyr(-diethyl).

The compounds of formula (I) or combinations with other active ingredients (B) and/or (C) can be formulated in various ways, depending on the prevailing biological and/or chemico-physical parameters. Examples of possible formulations which are suitable are: wettable powders (WP), water-soluble powders (SP), water-soluble concentrates, emulsifiable concentrates (EC), emulsions (EW) such as oil-in-water and water-in-oil emulsions, sprayable solutions, suspension concentrates (SC), dispersions on an oil or water basis, solutions which are miscible with oil, capsule suspensions (CS), dusts (DP), seed-dressing products, granules for broadcasting and soil application, granules (GR) in the form of microgranules, spray granules, coated granules and adsorption granules, water-dispersible granules (WG), water-soluble granules (SG), ULV formulations, microcapsules and waxes.

These individual formulation types are known in principle and described, for example, in: Winnacker-Kuchler, "Chemische Technologie" [Chemical Technology], Volume 7, C. Hauser Verlag, Munich, 4th Edition 1986; Wade van Valkenburg, "Pesticide Formulations", Marcel Dekker, N.Y, 1973; K. Martens, "Spray Drying Handbook", 3rd Ed. 1979, G. Goodwin Ltd. London.

The necessary formulation auxiliaries such as inert materials, surfactants, solvents and other additives are also known and described, for example, in: Watkins, "Handbook of Insecticide Dust Diluents and Carriers", 2nd Ed., Darland Books, Caldwell N.J.; H.v. Olphen, "Introduction to Clay Colloid Chemistry", 2nd Ed., J. Wiley & Sons, N.Y; C. Marsden, "Solvents Guide", 2nd Ed., Interscience, N.Y 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y 1964; Schönfeldt, "Grenzflächenaktive Äthylenoxidaddukte" [Surface-active ethylene oxide adducts], Wiss. Verlagsgesell., Stuttgart 1976; Winnacker-Küchler, "Chemische Technologie" [Chemical Technology], Volume 7, C. Hauser Verlag, Munich, 4th Ed. 1986.

Based on these formulations, it is also possible to prepare combinations with other pesticidally active substances (C) such as, for example, insecticides, acaricides, herbicides, fungicides, and with safeners, fertilizers and/or growth regulators, for example in the form of a readymix or a tank mix.

Wettable powders are preparations which are uniformly dispersible in water and which, besides the compounds of formula (I), also comprise ionic and/or nonionic surfactants (wetters, dispersants), for example, polyoxyethylated alkylphenols, polyoxyethylated fatty alcohols, polyoxyethylated fatty amines, fatty alcohol polyglycol ether sulfates, alkanesulfonates or alkylbenzenesulfonates, sodium lignosulfonate, sodium 2,2'-dinaphthylmethane-6,6'-disulfonate, sodium dibutylnaphthalenesulfonate or else sodium oleoylmethyltaurinate, in addition to a diluent or inert substance. To prepare the wettable powders, the compounds of formula (I) are, for example, ground finely in conventional apparatuses such as hammer mills, blower mills and air-jet mills and mixed with the formulation auxiliaries, either concomitantly or thereafter.

Emulsifiable concentrates are prepared, for example, by dissolving the compounds of formula (I) in an organic solvent, for example butanol, cyclohexanone, dimethylformamide, xylene or else higher-boiling aromatics or hydrocarbons or mixtures of these, with addition of one or more ionic and/or nonionic surfactants (emulsifiers). Emulsifiers which can be used are, for example: calcium salts of alkylarylsulfonic acids, such as calcium dodecylbenzenesulfonate or nonionic emulsifiers, such as fatty acid polyglycol esters, alkylaryl polyglycol ethers, fatty alcohol polyglycol ethers, propylene oxide/ethylene oxide condensates, alkyl polyethers, sorbitan esters such as sorbitan fatty acid esters or polyoxyethylene sorbitan esters such as polyoxyethylene sorbitan fatty acid esters.

Dusts are obtained by grinding the active substance with finely divided solid substances, for example talc or natural clays, such as kaolin, bentonite or pyrophyllite, or diatomaceous earth.

Suspension concentrates may be water- or oil-based. They can be prepared, for example, by wet grinding by means of commercially available bead mills, if appropriate with addition of surfactants, as they have already been mentioned above for example in the case of the other formulation types.

Emulsions, for example oil-in-water emulsions (EW), can be prepared for example by means of stirrers, colloid mills and/or static mixtures using aqueous organic solvents and, if appropriate, surfactants as they have already been mentioned above for example in the case of the other formulation types.

Granules can be prepared either by spraying the compounds of formula (I) onto adsorptive, granulated inert material or by applying active substance concentrates onto the surface of carriers such as sand, kaolinites or of granulated inert material, by means of binders, for example polyvinyl alcohol, sodium polyacrylate or alternatively mineral oils. Suitable active substances can also be granulated in the manner which is conventional for the production of fertilizer granules, if desired in a mixture with fertilizers.

Water-dispersible granules are prepared, as a rule, by the customary processes such as spray-drying, fluidized-bed granulation, disk granulation, mixing in high-speed mixers and extrusion without solid inert material. To prepare disk, fluidized-bed, extruder and spray granules, see, for example, processes in "Spray-Drying Handbook" 3rd ed. 1979, G. Goodwin Ltd., London; J.E. Browning, "Agglomeration", Chemical and Engineering 1967, pages 147 et seq.; "Perry's Chemical Engineer's Handbook", 5th Ed., McGraw-Hill, New York 1973, p. 8-57.

For further details on the formulation of crop protection products, see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

As a rule, the agrochemical preparations comprise 0.1 to 99% by weight, in particular 0.1 to 95% by weight, of compounds of formula (I).

The concentration of compounds of formula (I) in wettable powders is, for example, approximately 10 to 90% by weight, the remainder to 100% by weight being composed of customary formulation components. In the case of emulsifiable concentrates, the concentration of compounds of formula (I) can amount to approximately 1 to 90, preferably 5 to 80% by weight. Formulations in the form of dusts usually comprise 1 to 30% by weight of compounds of formula (I), preferably in most cases 5 to 20% by weight of compounds of formula (I), while sprayable solutions comprise approximately 0.05 to 80, preferably 2 to 50% by weight of compounds of formula (I). In the case of water-dispersible granules, the content of compounds of formula (I) depends partly on whether the compounds of formula (I) are in liquid or solid form and on which granulation auxiliaries, fillers and the like are being used. The water-dispersible granules, for example, comprise between 1 and 95% by weight of active substance, preferably between 10 and 80% by weight.

In addition, the formulations of compounds of formula (I) mentioned comprise, if appropriate, the adhesives, wetters, dispersants, emulsifiers, penetrants, preservatives, antifreeze agents, solvents, fillers, carriers, colorants, antifoams, evaporation inhibitors, pH regulators and viscosity regulators which are conventional in each case.

The compounds of the formula (I) or their salts can be employed as such or in the form of their preparations (formulations) as combinations with other pesticidally active substances, such as, for example, insecticides, acaricides, nematicides, herbicides, fungicides, safeners, fertilizers and/or growth regulators, for example as a premix or as tank mixes.

### Formulation examples

a) A dust is obtained by mixing 10 parts by weight of a compound of formula (I) and 90 parts by weight of talc as inert material and grinding the mixture in a hammer mill.
b) A wettable powder which is readily dispersible in water is obtained by mixing 25 parts by weight of a compound of formula (I), 64 parts by weight of kaolin-containing quartz as inert material, 10 parts by weight of potassium lignosulfonate and 1 part by weight of sodium oleoylmethyltaurinate as wetter and dispersant and grinding the mixture in a pinned-disk mill.
c) A dispersion concentrate which is readily dispersible in water is obtained by mixing 20 parts by weight of a compound of formula (I) with 6 parts by weight of alkylphenol polyglycol ether (®Triton X 207), 3 parts by weight of isotridecanol polyglycol ether (8 EO) and 71 parts by weight of paraffinic mineral oil (boiling range for example approx. 255 to above 277°C) and grinding the mixture in a ball mill to a fineness of below 5 microns.
d) An emulsifiable concentrate is obtained from 15 parts by weight of a compound of formula (I), 75 parts by weight of cyclohexanone as solvent and 10 parts by weight of oxethylated nonylphenol as emulsifier.
e) Water-dispersible granules are obtained by mixing
   75 parts by weight of a compound of formula (I),
   10 parts by weight of calcium ligno-sulfonate,
   5 parts by weight of sodium laurylsulfate,
   3 parts by weight of polyvinyl alcohol and
   7 parts by weight of kaolin,
      grinding the mixture in a pinned disk mill and granulating the powder in a fluidized bed by spraying on water as granulation liquid.
f) Alternatively, water-dispersible granules are obtained by homogenizing and precomminuting, on a colloid mill,
   25 parts by weight of a compound of formula (I),
   5 parts by weight of sodium 2,2'-dinaphthylmethane-6,6'-disulfonate,
   2 parts by weight of sodium oleoylmethyltaurinate,
   1 part by weight of polyvinyl alcohol,
   17 parts by weight of calcium carbonate and
   50 parts by weight of water,
      subsequently grinding the mixture on a bead mill and atomizing and drying the resulting suspension in a spray tower by means of a single-substance nozzle.

### Preparation of the spray liquids

The compound of formula (I) was formulated as water dispersible powder (WP). These formulations were diluted in a water volume of 300l/ha to give a spray liquid with the needed concentration.

### Biological Examples

General application and evaluation conditions:
Seeds of various turf and lawn grass species and weed species were planted in a sandy-loamy soil and placed in growth chambers under good growing conditions until they reached the growth stage BBCH12 to BBCH13. The plants were sprayed with a tank mixture containing the formulated test compound at a spray rate of 300l/ha (litre/hectare) of spray solution.

Selectivity ratings on turfgrasses were based on a 1-9 scale (1 = turf dead, 9 = no damage, 7-9 is an acceptable selectivity). Efficacy ratings for weed control were assessed as % damage compared to parallel untreated controls. Evaluation timing was 3 weeks after application.

### Example A: Turf grass selectivity of post emergent spray applications

A WP 10 - formulation (10 parts by weight of a compound of formula (I) of the invention (i.e. compound A12)) was diluted with water and applied with a water volume of 300 liter/ha using a track sprayer at an application rate of 2 g a.i./ha. 300 g/ha of the Adjuvant Genapol X-060 was always added to the spray liquid. 21 DAA (days after application), the selectivity on turfgrass species was assessed.

From the test with turfgrass varieties like Cynodon spp., Zoysia spp., Paspalum notatum, Festuca rubra and Festuca arundinacea high average selectivity ratings are found with the compounds (see table below):

| Turfgrasses | Selectivity Rating 3 weeks after application |
|---|---|
| untreated | 9 |
| Cynodon spp. | 8-9 |
| Zoysia spp. | 8-9 |
| Paspalum notatum | 8-9 |
| Festuca rubra | 8-9 |
| Festuca arundinacea | 8-9 |
| Agrostis stolonifera | 7-8 |
| Lolium perenne | 7-8 |

### Example B: Weed control of post emergent spray applications

A WP 10 - formulation of a compound of formula (I) of the invention (10 parts by weight of a compound of formula (I) of the invention (i.e. compound A12)) was diluted with water and applied with a water volume of 300 liter/ha using a track sprayer at an application rate of 2 g a.i./ha. 300 g/ha of the Adjuvant Genapol X-060 was always added to the spray liquid. 21 DAA the control of turf grass weed species was assessed. The test shows high efficacy on weeds in turf grasses like e.g. Digitaria sanguinalis, Trifolium repens, Bellis perennis and Taraxacum officinale.

| Weeds | Efficacy rating |
|---|---|
| Digitaria sanguinalis | 80%-90% |
| Trifolium repens | 80%-90% |
| Bellis perennis | 80%-90% |
| Taraxacum officinale | 80%-90% |

## Claims

1. Use of one or more compounds of the formula (I) or salts thereof, 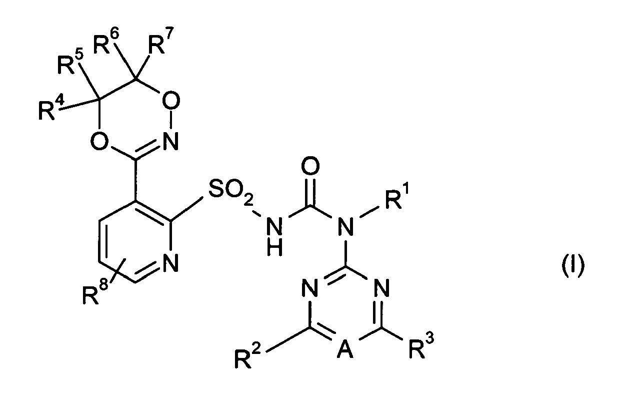 in which
A is nitrogen or a CR¹¹ grouping, where R¹¹ is hydrogen, alkyl, halogen or haloalkyl,
R¹ is hydrogen or an optionally substituted radical from the group consisting of alkyl, alkoxy, alkoxyalkyl, alkenyl, alkynyl, cycloalkyl, cycloalkylalkyl, aralkyl and aryl,
R² is hydrogen, halogen or is in each case optionally halogen-substituted alkyl, alkoxy, alkylthio, alkylamino or dialkylamino having in each case 1 to 6 carbon atoms,
R³ is hydrogen, halogen or is in each case optionally halogen-substituted alkyl, alkoxy, alkylthio, alkylamino or dialkylamino having in each case 1 to 6 carbon atoms,
R⁴ - R⁷ independently of one another are hydrogen, halogen, cyano, thiocyanato or are in each case optionally halogen-substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
R⁸ is hydrogen, halogen, cyano, thiocyanato or is in each case optionally halogen- substituted alkyl, alkoxy, alkylthio, alkylsulfinyl, alkylsulfonyl, alkylamino, alkylcarbonyl, alkoxycarbonyl, alkylaminocarbonyl having in each case 1 to 3 carbon atoms,
where in the radicals mentioned above the alkyl and alkylene groups may in each case contain 1 to 6 carbon atoms, the alkenyl and alkynyl groups may in each case contain 2 to 6 carbon atoms, the cycloalkyl groups may in each case contain 3 to 6 carbon atoms and the aryl groups may in each case contain 6 or 10 carbon atoms for selective weed control on turf or lawn.

2. Use as claimed in claim 1, **characterized by** compounds (I) or salts thereof, where
A is nitrogen or a CH grouping,
R¹ is hydrogen, methyl, ethyl, methoxy, methoxymethyl or ethoxy,
R² is hydrogen, chlorine, methyl, ethyl, trifluoromethyl, methoxy, ethoxy, difluoromethoxy, methylthio, methylamino or dimethylamino,
R³ is hydrogen, chlorine, methyl, ethyl, trifluoromethyl, methoxy, ethoxy, difluoromethoxy, methylthio, methylamino or dimethylamino,
R⁴ - R⁷ independently of one another are hydrogen, fluorine, chlorine, cyano, or are in each case optionally chlorine- or fluorine-substituted methyl, methylthio, methylsulfinyl, methylsulfonyl, methoxycarbonyl and ethoxycarbonyl, preferably hydrogen,
R⁸ is hydrogen, fluorine, chlorine, bromine, cyano or is in each case optionally chlorine- or fluorine-substituted methyl, methoxy, ethoxy, methylthio, ethylthio,
methylsulfinyl, ethylsulfinyl, methylsulfonyl, ethylsulfonyl, methyl- or dimethylamino.

3. Use as claimed in claim 1, **characterized by** compounds (I) or salts thereof,
A is CH,
R¹ is hydrogen or methyl,
R² is hydrogen, chlorine, methyl, ethyl, trifluoromethyl, methoxy, ethoxy, difluoromethoxy, methylthio, methylamino or dimethylamino,
R³ is hydrogen, chlorine, methyl, ethyl, trifluoromethyl, methoxy, ethoxy, difluoromethoxy, methylthio, methylamino or dimethylamino,
R⁴ - R⁷ are hydrogen,
R⁸ is hydrogen.

4. Use as claimed in any one of claims 1 to 3, **characterized by** applying (A) one or more compounds of the formula (I) or a salt thereof [type (A) herbicides], optionally together, before or after the application of one or more other active ingredients selected from the group consisting of (B) other herbicides [type (B) herbicides] useful in the treatment of lawn or turf, and optionally (C) other active ingredients [type (C) active ingredients] useful in the treatment of lawn or turf,
to the weeds, parts of the weed plants or the area under cultivation where the plants of lawn or turf are growing, sown or to be sown.

5. Use as claimed in claim 4, **characterized in that** the herbicides (B) are selected from the group consisting of:
| | |
|---|---|
| (B1) | 2,4-D and esters and salts thereof, |
| (B2) | Amidosulfuron or salts thereof, preferably (B2.1) Amidosulfuron, |
| (B3) | Aminocyclopyrachlor or salts or esters thereof, preferably (B3.1) Aminocyclopyrachlor or (B3.2) Aminocyclopyrachlor-methyl, |
| (B4) | Aminopyralid or salts thereof, preferably (B4.1) Aminopyralid, |
| (B5) | Bromoxynil or esters thereof, preferably (B5.1) Bromoxynil, (B5.2) Bromoxynil-heptanoate or (B5.3) Bromoxynil-octanoate, |
| (B6) | Diflufenican, |
| (B7) | Ethofumesate, |
| (B8) | Ethoxysulfuron or salts thereof, preferably (B8.1) Ethoxysulfuron or (B8.2) Ethoxysulfuron-sodium, |
| (B9) | Fluroxypyr or esters thereof, preferably (B9.1) Fluroxypyr, (B9.2) Fluroxypyr-meptyl or (B9.3) Fluroxypyr-2-butoxy-l-methylethyl, |
| (B10) | Fatty acids, preferably (B10.1) acetic acid, |
| (B11) | Glufosinate or salts thereof, preferably (B11.1) Glufosinate, (B11.2) Glufosinate-ammonium or (B11.3) Glufosinate-sodium |
| (B12) | Glufosinate-P (= L-Glufosinate or phosphinothricin) or salts thereof, preferably (B12.1) Glufosinate-P, (B12.2) Glufosinate-P-sodium or (B12.3) Glufosinate-P-ammonium, |
| (B13) | Glyphosate or salts thereof, preferably (B13.1) Glyphosate, (B13.2) Glyphosate-sodium, (B13.3)Glyphosate-potassium, (B13.4) Glyphosate-ammonium, (B13.5) Glyphosate-diammonium or (B13.6) Glyphosate-isopropylammonium, |
| (B14) | lodosulfuron and esters and salts thereof, preferably (B14.1) lodosulfuron, (B14.2) lodosulfuron-methyl or (B14.3) lodosulfuron-methyl-sodium, |
| (B15) | Mesosulfuron and esters or salts thereof, preferably (B15.1) Mesosulfuron or (B15.2) Mesosulfuron-methyl, |
| (B16) | Metosulam, |
| (B17) | Paraquat and salts thereof, preferably (B17.1) Paraquat-dichloride, |
| (B18) | Penoxsulam and salts thereof, preferably (B18.1) Penoxsulam, |
| (B19) | Picloram and esters and salts thereof, preferably (B19.1) Picloram, (B19.2) Picloram-potassium, (B19.3) Picloram-dimethylammonium, (B19.4) Picloram-triisopropylammonium, (B19.5) Picloram-triethanolammonium, (B19.6) Picloram-triisopropanolammonium or (B19.7) Picloram-isooctyl, |
| (B20) | Pyrasulfotole and salts thereof, preferably (B20.1) Pyrasulfotole, |
| (B21) | Pyroxasulfone (KIH-485) and salts thereof, preferably (B21.1) Pyroxasulfone, |
| (B22) | Pyroxsulam and salts thereof, preferably (B22.1) Pyroxulam, |
| (B23) | Rimsulfuron and salts thereof, preferably (B23.1) Rimsulfuron, |
| (B24) | Saflufenacil and salts thereof, preferably (B24.1) Saflufenacil, |
| (B25) | Sclerotinia (biological herbicides), |
| (B26) | SYN-449 and salts thereof, preferably (B26.1) SYN-449, |
| (B27) | SYN-523 and salts thereof, preferably (B27.1) SYN-523, |
| (B28) | Tembotrione and salts thereof, preferably (B28.1) Tembotrione, |
| (B29) | Thiencarbazone and esters and salts thereof, preferably (B29.1) Thiencarbazone, (B29.2) Thiencarbazone-methyl or (B29.3) Thiencarbazone-methyl-sodium, |
| (B30) | Thifensulfuron and esters and salts thereof, preferably (B30.1) Thifensulfuron, (B30.2) Thifensulfuron-methyl or (B30.3) Thifensulfuron-methyl-sodium, |
| (B31) | Tribenuron and esters and salts thereof, preferably (B31.1) Tribenuron, (B31.2) Tribenuron-methyl or (B31.3) Tribenuron-methyl-sodium, |
| (B32) | Trifloxysulfuron and salts thereof, preferably (B32.1) Trifloxysulfuron or (B32.2)Trifloxysulfuron-sodium, |
| (B33) | Dicamba and esters and salts thereof, preferably (33.1) Dicamba, (33.2) Dicamba-sodium, (33.3) Dicamba-potassium, (33.4) Dicamba-dimethylammonium, (33.5) Dicamba-isopropylammonium, (33.5) Dicamba-diglycolamin salt or (33.4) Dicamba-butotyl, |
| (B34) | Mecoprop and Mecoprop-P, and esters and salts thereof, preferably (34.1) Mecoprop and esters and salts thereof, (34.2) Mecoprop-P and esters and salts thereof. (34.3) Mecoprop, (34.4) Mecoprop-P, (34.5) Mecoprop-sodium, (34.6) Mecoprop-butotyl, (34.7) Mecoprop-P, (34.8) Mecoprop-P-sodium, (34.9) Mecoprop-P-potassium, (34.10) Mecoprop-P-butotyl or (34.11) Mecoprop-P-2-ethyl-hexyl, |
| (B35) | MCPA and esters and salts thereof, preferably (35.1) MCPA, (35.2) MCPA-sodium, (35.3) MCPA-potassium, (35.4) MCPA-dimethylammonium or (35.5) Mecoprop-P-2-ethyl-hexyl, |
| (B36) | Fenoxaprop and esters and salts thereof, preferably (36.1) Fenoxaprop or (36.2) Fenoxaprop-ethyl, |
| (B37) | Fenoxaprop-P, and esters and salts thereof, preferably (36.1) Fenoxaprop-P or (37.2) Fenoxaprop-P-ethyl, |
| (B38) | Carfentrazone, and esters and salts thereof, preferably (38.1) Carfentrazone or (38.2) Carfentrazone-ethyl, |
| (B39) | Sulfentrazone and salts thereof, preferably (39.1) Sulfentrazone, |
| (B40) | Oxadiazon and salts thereof, preferably (40.1) Oxadiazon, |
| (B41) | Metsulfuron and esters and salts thereof, preferably (41.1) Metsulfuron or (41.2) Metsulfuron-methyl, |
| (B42) | Triclopyr and esters and salts thereof, preferably (42.1) Triclopyr, (43.2) Triclopyr-triethylammonium or (42.3) Triclopyr-butotyl, and |
| (B43) | Foramsulfuron or salts thereof, preferably (43.1) Foramsulfuron. |

6. Use as claimed in claim 4 or 5, **characterized in that** the active ingredients (C) are selected from the group consisting of: insecticides, acaricides, fungicides, safeners, fertilizers and/or growth regulators or nutrients useful for treating lawn or turf against phytopathogenic diseases or for growth regulation or growth promotion of lawn or turf.

7. Use as claimed in any one of claims 1 to 6, **characterized by** applying a compound of formula (I) or salt thereof to the locus of the turfgrass before or after emergence of the weeds.

8. Use as claimed in any one of claims 1 to 7, **characterized by** applying a compound of formula (I) or salt thereof to the locus of the weed plants and lawn or turf plants pre-plant or pre-emergence of the lawn or turf.

9. Use as claimed in any one of claims 1 to 8, **characterized by** applying from 0.01 to 2000 g compound of formula (I) or salt thereof per hectare lawn or turf.

10. Method for controlling weeds on lawn or turf, **characterized by** applying (A) one or more compounds of the formula (I) or a salt thereof [type (A) herbicides], optionally together, before or after the application of one or more other active ingredients selected from the group consisting of (B) other herbicides [type (B) herbicides] useful in the treatment of lawn or turf, and optionally (C) other active ingredients [type (C) active ingredients] useful in the treatment of lawn or turf, to the weeds, parts of the weed plants or the area under cultivation where the plants of lawn or turf are growing, sown or to be sown.

11. Herbicidal composition for weed control in lawn or turf, **characterized in** comprising
(A) one or more compounds of the formula (I) or a salt thereof as defined in any of claims 1 to 3 and
(B) optionally one or more other herbicides, and
(C) other active ingredients selected from the group consisting of insecticides and fungicides useful against phytopathogenic diseases of lawn or turf and fertilizers, and optionally, formulation auxiliaries.
